# EUROPEAN PATENT APPLICATION

(11) **EP 4 794 357 A1**
(43) Date of publication of application: **19.08.2026**
(21) Application number: 24876498.7
(22) Date of filing: 08.10.2024
(51) Int. Cl.: H04W 4/02

(54) **ELECTRONIC DEVICE, POSITIONING METHOD AND COMPUTER READABLE STORAGE MEDIUM**

(30) Priority: 09.10.2023 CN 202311305639
(71) Applicant: Sony Group Corporation, Tokyo 108-0075 (JP)
(72) Inventor: JIANG, Wangjun, Beijing 100027 (CN); SUN, Chen, Beijing 100027 (CN); LI, Haojin, Beijing 100027 (CN)
(74) Representative: D Young & Co LLP
(86) International application number: PCT/CN2024/123366
(87) International publication number: WO 2025/077684

(57) **Abstract**

Provided are an electronic device, a positioning method and a computer readable storage medium. The electronic device may comprise a processing circuit, and the processing circuit is configured to: send a positioning instruction to a plurality of terminal devices near a positioning target, so as to instruct the terminal devices to send sensing signals to the positioning target and receive echo signals to obtain sensing data; receive the plurality of pieces of sensing data from the plurality of terminal devices; and process the received sensing data to obtain a positioning result of the positioning target.

## Description

This application claims priority to Chinese Patent Application No. 202311305639.6 titled "Electronic device, positioning method, and computer-readable storage medium", filed on October 9, 2023 with the China National Intellectual Property Administration, which is incorporated herein by reference in its entirety.

### FIELD

The present disclosure relates to the technical field of wireless communications, and in particular to an electronic device, a positioning method, and a computer-readable storage medium that facilitates positioning with sensing signals.

### BACKGROUND

A high-precision positioning technology refers to precise positioning of a target location by using advanced sensors, algorithms, and data processing technologies. This technology may be applied to various fields, such as navigation, self-driving cars, aerospace, military, and earthquake early warning. In high-precision positioning technology, information related to a target location is collected typically through a global positioning system (GPS), an inertial navigation system (INS), an LiDAR and other sensors, and the information is then analyzed and processed with advanced algorithms and data processing techniques to obtain more accurate position information.

In practical applications, existing high-precision positioning technologies may have various problems. For example, due to limitations such as building obstruction, high-precision positioning in an indoor environment is difficult to achieve using only GPS and other conventional solutions. In addition, the INS can only perform relative positioning, which has a cumulative error. In addition, the LiDAR and other high-precision sensors cause high costs and therefore has difficulty in being widely promoted in indoor environments.

In addition, a traditional positioning technology based on wireless communications relies on cooperation of multiple base stations/positioning anchors to achieve high-precision positioning and measurements, and in order to obtain an accurate measurement result, a direct path is required between a positioning terminal and a positioning anchor. In practical applications, an obstruction may exist on the direct path between the positioning terminal and the positioning anchor, which may lead to a decrease in positioning precision.

### SUMMARY

Hereinafter provided is a brief summary of the present disclosure, which is intended to provide a basic understanding of aspects of the present disclosure. It should be understood, however, that this summary is not an exhaustive overview of the present disclosure. The summary is not intended to identify key or critical portions of the present disclosure or to delineate the scope of the disclosure. The purpose is merely to present some concepts about the present disclosure in a simplified form, as a prelude to the more detailed description that is presented later.

At least one aspect of the present disclosure aims to provide an electronic device, a positioning method, and a computer-readable storage medium, with which positioning is performed by using sensing signals from multiple terminal devices, which facilitates high-precision positioning with a relatively low cost and is applicable to situations with building obstructions, such as indoor environments.

According to an aspect of the present disclosure, an electronic device is provided. The electronic device includes processing circuitry configured to: transmit a positioning instruction to each of multiple terminal devices near a positioning target to instruct the terminal device to transmit a sensing signal to the positioning target and receive an echo signal to obtain sensing data; receive multiple pieces of sensing data from the multiple terminal devices; and process the received sensing data to obtain a positioning result for the positioning target.

According to another aspect of the present disclosure, a terminal device is provided. The terminal device includes processing circuitry configured to: receive a positioning instruction from an electronic device; based on the positioning instruction, transmit a sensing signal to a positioning target and receive an echo signal to obtain sensing data; transmit the sensing data to the electronic device, for the electronic device to process multiple pieces of sensing data from multiple terminal devices to obtain a positioning result for the positioning target.

According to another aspect of the present disclosure, a positioning method is provided. The method includes: transmitting a positioning instruction to each of multiple terminal devices near a positioning target to instruct the terminal device to transmit a sensing signal to the positioning target and receive an echo signal to obtain sensing data; receiving multiple pieces of sensing data from the multiple terminal devices; and processing the received sensing data to obtain a positioning result for the positioning target.

According to another aspect of the present disclosure, a positioning method implemented on a terminal device side is provided. The method includes: receiving a positioning instruction from an electronic device; based on the positioning instruction, transmitting a sensing signal to a positioning target and receiving an echo signal to obtain sensing data; transmitting the sensing data to the electronic device, for the electronic device to process multiple pieces of sensing data from multiple terminal devices to obtain a positioning result for the positioning target.

According to another aspect of the present disclosure, a non-transitory computer-readable storage medium storing executable instructions is provided. The executable instructions, when executed by a processor, cause the processor to perform the above-described positioning method or functions of the above-described electronic device or the terminal device.

According to other aspects of the present disclosure, computer program codes and a computer program product for implementing the above-described method according to the present disclosure are further provided.

According to at least one aspect of the embodiments of the present disclosure, positioning is performed by using sensing signals from multiple terminal devices near a positioning target, which facilitates high-precision positioning with a relatively low cost and is applicable to situations with building obstructions, such as indoor environments.

Other aspects of the embodiments of the present disclosure are set forth in the following sections of the specification. The detailed description is provided to fully disclose preferred embodiments of the embodiments of the present disclosure, rather than to impose limitations thereon.

### BRIEF DESCRIPTION OF THE DRAWINGS

The accompanying drawings described herein are only for illustrative purposes of selected embodiments, rather than all possible embodiments, and are not intended to limit the scope of the present disclosure. In the drawings:
FIG. 1 is a schematic diagram illustrating collaborative positioning by multiple terminal devices;
FIG. 2 is a block diagram illustrating an exemplary configuration of an electronic device according to a first embodiment of the present disclosure;
FIG. 3A and FIG. 3B are schematic diagrams illustrating constitution or approximate constitution of convex a hull set by sensing vectors;
FIG. 4A to FIG. 4D are diagrams for illustrating example processing of vector fusion;
FIG. 5 and FIG. 6 are flowcharts illustrating example signaling interactions between an electronic device and a terminal device according to embodiments;
FIG. 7 is a block diagram illustrating an exemplary configuration of a terminal device according to a second embodiment of the present disclosure;
FIG. 8 is a flowchart illustrating an exemplary process of a positioning method according to a first embodiment of the present disclosure;
FIG. 9 is a flowchart illustrating an exemplary process of a positioning method implemented on a terminal device side according to a second embodiment of the present disclosure;
FIG. 10 is a block diagram showing a first example of a schematic configuration of an eNB to which the technology of the present disclosure is applicable;
FIG. 11 is a block diagram showing a second example of a schematic configuration of an eNB to which the technology of the present disclosure is applicable;
FIG. 12 is a block diagram illustrating an example of a schematic configuration of a smart phone to which the technology of the present disclosure is applicable; and
FIG. 13 is a block diagram showing an example of a schematic configuration of an automobile navigation device to which the technology of the present disclosure is applicable.

Although the present disclosure is easily subjected to various modifications and replacements, specific embodiments thereof, as examples, are shown in the drawings and described in detail here. However, it should be understood that, the description of specific embodiments herein is not intended to limit the present disclosure to specific forms that are disclosed. On the contrary, an object of the present disclosure is to cover all modifications, equivalents and replacements that fall within the spirit and scope of the present disclosure. It should be noted that throughout the several drawings, corresponding components are indicated by corresponding reference numerals.

### DETAILED DESCRIPTION

Examples of the present disclosure are now fully described with reference to the accompanying drawings. The following description is merely substantially exemplary and is not intended to limit the present disclosure, an application or use thereof.

Exemplary embodiments are provided so that the present disclosure is described in detail and fully conveys the scope thereof to those skilled in the art. Examples of specific components, apparatus, methods and other specific details are set forth to provide detailed understanding of embodiments of the present disclosure. It will be apparent to those skilled in the art that the exemplary embodiments may be implemented in many different forms without the use of specific details, and they should not be construed as limiting the scope of the present disclosure. In some exemplary embodiments, well-known processes, well-known structures, and well-known technologies are not described in detail.

The description is given in the following order.
1 Overview
2. Configuration Example of Electronic Device
3. Configuration Example of Terminal Device
4. Method Embodiment
5. Application Example

### <1 Overview>

As mentioned above, existing high-precision positioning technologies and traditional wireless communication-based positioning technologies that utilize base stations and/or positioning anchors may experience a decrease in positioning precision in situations such as indoor environments with obstructions.

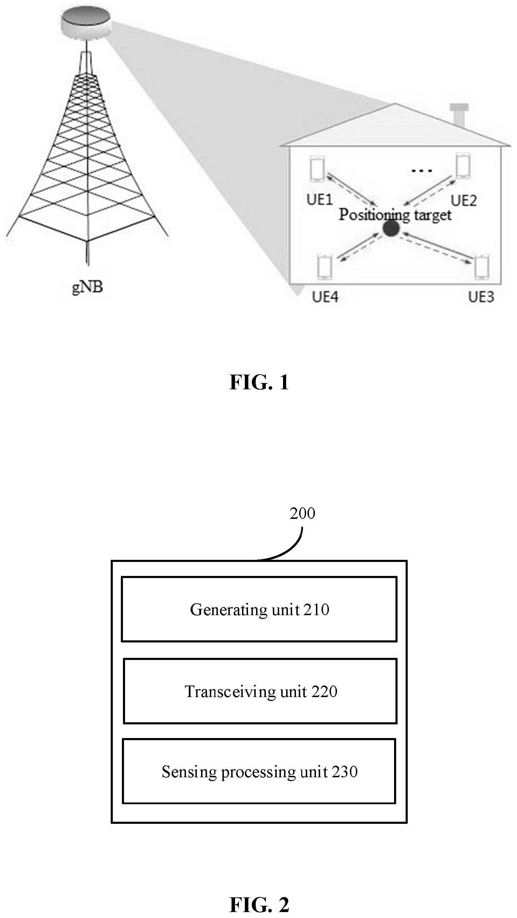

In view of the above situation, a concept of collaborative positioning using sensing signals of multiple terminal devices near a positioning target is proposed in the present disclosure. FIG. 1 is a schematic diagram illustrating collaborative positioning by multiple terminal devices. As shown in FIG. 1, with the control of an electronic device gNB, such as a base station, multiple terminal devices UEi (i=1, 2, 3, 4) near a positioning target in an indoor environment (which may be, for example, a terminal device UEX within a coverage of the gNB) transmit sensing signals to the positioning target and receive echo signals to obtain sensing data. Then, a positioning result for the positioning target is obtained based on the sensing data. In this way, a large number of terminal devices present in an indoor environment are effectively utilized, and precision of a positioning result can be improved based on the sensing data of the terminal devices.

Next, apparatus/method embodiments and various preferred examples and processes based on the above-described concept are described with reference to the example of beam management in FIG. 1. It should be noted that although the concept of the present disclosure is originally proposed based on the problem existing in the indoor environment, those skilled in the art shall understand, based on the present disclosure, that the present disclosure is not limited to the indoor environment and can be appropriately applied to various scenarios, as long as there are multiple terminal devices near the positioning target, which is described in further detail here.

### <2. Configuration Example of Electronic Device>

FIG. 2 is a block diagram illustrating an exemplary configuration of an electronic device according to a first embodiment of the present disclosure.

As shown in FIG. 2, the electronic device 200 may include a generating unit 210, a transceiving unit 220, and a sensing processing unit 230. Optionally, the electronic device 200 may further include a storage unit (not shown) for storing various data, programs, and information.

Here, units of the electronic device 200 may be included in processing circuitry. It should be noted that the electronic device 200 may include a single processing circuit or multiple processing circuits. Further, the processing circuitry may include various discrete functional units for performing various different functions and/or operations. It should be noted that these functional units may be physical entities or logical entities, and units with different names may be implemented by a same physical entity.

Preferably, the electronic device 200 may be a network-side device such as a base station-side device, thereby conveniently controlling multiple terminal devices near a positioning target to cooperate in sensing and positioning. In the following description of the embodiment, detailed descriptions are given with an example in which the electronic device 200 is a base station-side device (such as the gNB as shown in FIG. 1). In addition, to simplify the description, some detailed descriptions incorporate example application scenarios where the positioning target is a terminal device UEX. However, the present disclosure is not limited thereto. The electronic device 200 may be a terminal device and communicates with multiple terminal devices near the positioning target through sidelink communications or other manner, thereby controlling the terminal devices to cooperate in sensing and positioning. The positioning target may be a positioning object other than the terminal devices, which is not described in detail here.

According to an embodiment of the present disclosure, the generating unit 210 of the electronic device 200 may be configured to generate a positioning instruction for multiple terminal devices near a positioning target. The transceiving unit 220 of the electronic device 200 may be configured to transmit the positioning instruction generated by the generating unit 210 to each of multiple terminal devices near the positioning target, to instruct the terminal device to transmit a sensing signal to the positioning target and receive an echo signal to obtain sensing data; and receive multiple pieces of sensing data from the multiple terminal devices. In addition, the sensing processing unit 230 of the electronic device 200 may be configured to process the received sensing data to obtain a positioning result for the positioning target.

In this way, the electronic device 200 can instruct multiple terminal devices near the positioning target to cooperate in sensing and positioning, thereby facilitating acquisition of a final positioning result for the positioning target based on the sensing data of the multiple terminal devices.

In order to perform collaborative positioning by the terminal devices near the positioning target, as a preprocessing step, the electronic device 200 may obtain information such as a preliminary position of the positioning target and a preliminary position of a terminal device near the positioning target in various appropriate ways through the transceiving unit 220 and the sensing processing unit 230 (which may be additionally configured, for example, to perform a conventional positioning process), so as to facilitate subsequently instructing the terminal devices to participate in collaborative positioning and to obtain a final positioning result from sensing data thereof.

For example, in a case where the electronic device 200 is a base station-side device such as a gNB as in FIG. 1 and the positioning target is a terminal device UEX, the transceiving unit 220 may transmit and receive a reference signal to and from the positioning target UEX, and the sensing processing unit 230 may perform various existing positioning processes based on the received reference signal to obtain a preliminary positioning for the positioning target as a preliminary position P0 of the positioning target. Furthermore, for example, in a case where the positioning target has a GPS positioning function, the electronic device 200 may receive, through the transceiving unit 220 and from the positioning target, a preliminary position P0 reported by the positioning target. Here, due to a limited positioning precision and other reasons, the sensing processing unit 230 may additionally or alternatively obtain a position range (rather than a single position) of the positioning target, i.e., a target area areaT, as the preliminary position P0 of the positioning target. A method of obtaining the preliminary position of the positioning target is not limited in the present disclosure.

After the preliminary position P0 of the positioning target is obtained, the generating unit 210 may, for example, determine a circular area with an appropriate radius centered on P0 as a nearby area areaN, and regard a terminal device within the area as a terminal device UEi near the positioning target. In the case where the electronic device 200 is a base station-side device such as the gNB as in FIG. 1, the electronic device may be aware of terminal devices within a coverage of the electronic device or near the positioning target (that is, within the nearby area areaN) in various manners, and may be aware of preliminary positions of the terminal devices in a manner similar to a manner of obtaining the preliminary position of the positioning target, which is not described in detail here.

The positioning instruction generated by the generating unit 210 for each terminal device near the positioning target may include control information regarding a time and/or manner in which the terminal device transmits a sensing signal to the positioning target and/or transmits sensing data to the electronic device. Here, the "control information regarding a manner of transmitting the sensing signal/sensing data" encompasses control information regarding a specific form or format of the sensing signal/sensing data.

For example, the positioning instruction may indicate the preliminary position of the positioning target and/or include beam-related information of the sensing signal. In addition, the positioning instruction may indicate content or entries included in the sensing data by indicating a format of the sensing data. The contents or entries may include raw data of the sensing signal and the echo signal, or may further include a preliminary sensing result obtained after the terminal device performs preliminary processing on the raw data. Preferably, the positioning instruction may indicate a format of the sensing data, such as requiring the sensing data to indicate an intensity and quality of the echo signal and an angle (sensing angle) and/or distance (sensing distance) of the positioning target relative to the terminal device, and/or requiring the sensing data to include beam-related information of the sensing signal (for example, but not limited to, beamwidth information). The intensity and quality of the echo signal and the beamwidth information of the sensing signal may characterize an accuracy of the sensing data, which thereby facilitates the sensing processing unit 230 to subsequently select and/or process the sensing data and determine precision of a positioning result obtained from the sensing data (details of which are described later).

The transceiving unit 220 transmits the positioning instruction to the terminal device, enabling the terminal device to transmit a sensing signal to the positioning target according to the time and/or manner indicated by the positioning instruction. Preferably, the terminal device may transmit the sensing signal to the positioning target using a directional beam based on the positioning instruction (for example, based on the preliminary position indicated by the positioning instruction and/or the beam-related information included in the positioning instruction), and may receive the echo signal reflected from the positioning target. Furthermore, preferably, the terminal device may transmit the sensing signal based on a transmission time of the sensing signal indicated by the positioning instruction.

In addition, the terminal device may obtain the sensing data as required based on the transmitted sensing signal and the received echo signal from the positioning target according to the format or form of the sensing data required by the positioning instruction, and transmit the sensing data to the electronic device 200, for example, according to the transmission time of the sensing signal required by the positioning instruction.

Depending on a specific requirement of the positioning instruction, in addition to obtaining raw data of the sensing signal and the echo signal, the terminal device may further perform preliminary processing on the raw data to obtain a sensing result, and use all or part of the above data and result as the sensing data to be provided to electronic device. Here, the raw data obtained by the terminal device may include, but is not limited to: a transmission time of the sensing signal (sensing time), a reception time of the echo signal, a time delay of the echo signal relative to the sensing signal, an intensity of the echo signal (for example, but not limited to, the received power of the echo signal), a quality of the echo signal (for example, but not limited to, a signal-to-noise ratio SNR and a signal-to-interference-plus-noise ratio SINR of the echo signal), a phase/angle/beam-related information of the sensing signal and the echo signal respectively, and/or Doppler information. In addition, the sensing result obtained by the terminal device from the preliminary processing on the raw data may include, but is not limited to, an angle and distance (sensing angle and sensing distance) of the positioning target relative to the terminal device.

The transceiving unit 220 may receive, from the terminal device, the sensing data transmitted by the terminal device in accordance with the time and manner indicated by the positioning instruction. By using a unified positioning instruction for control, the sensing data obtained by the transceiving unit 220 from terminal devices may be obtained by sensing the positioning terminal within the same or at least similar time period, and may have the same format, which thereby facilitates subsequent processing by the sensing processing unit 230.

The sensing processing unit 230 may process multiple pieces of sensing data received by the transceiving unit 220 from various terminal devices, for example, by acquiring or selecting required data from the sensing data and performing corresponding processing to obtain the positioning result for the positioning target. In an example, the sensing processing unit 230 may select, from multiple pieces of sensing data, the sensing data with high accuracy (for example, where the echo signal is strong or have another good quality indicator, or the beamwidth is small), and fuse the selected sensing data (for example, perform weighted fusion of the data based on the accuracy of the sensing data) to obtain the positioning result for the positioning target.

Described above are a basic configuration of the electronic device and processing performed by units of the electronic device. Next, relevant processing and further details of information/data involved are described with specific examples.

### (Positioning Instruction and Sensing Data)

As described above, the generating unit 210 may generate a positioning instruction PINSi to be transmitted to each terminal device UEi near the positioning target. The positioning instruction may have various appropriate forms and is provided to the UEi via the transceiving unit 220 to instruct the UEi to participate in a collaborative positioning process.

Hereinafter described is an example of specific information included in a positioning instruction PINSi (or control information thereof) generated for a terminal device UEi. The information includes, but is not limited to: position information Pinfo of a preliminary position P0 of the positioning target or beam-related information BMinfoi of a sensing signal of UEi (one of the two is alternatively included), a transmission time TimeS of the sensing signal, a transmission time TimeD of the sensing data or a transmission interval Timegap between the sensing data and the sensing signal (one of the two is alternatively included), a period T for transmitting the sensing data and the sensing signal (alternatively included), and form information Dform regarding a transmission form of the sensing data (content or entries of the sensing data, a packaging method, and the like). Alternatively, the positioning instruction PINSi generated by the generating unit 210 for the terminal device UEi may further include an identity or identifier ID, such as ID_{gNB}, of the electronic device 200 and synchronization information Syncinfo for synchronization.

In this example, the positioning instruction PINSi may be PINSi=[ID_{gNB}, Syncinfo, Pinfo/BMinfoi, TimeS, TimeD/Timegap, Dform].

The ID_{gNB} in the positioning instruction PINSi is to enable the UEi to be aware that the object to which the sensing data is transmitted is the electronic device 200 with that ID, and the synchronization information Syncinfo is for ensuring time synchronization between the electronic device 200 and the UEi. In a case where the electronic device 200 is a gNB as shown in FIG. 1, the UEi is a terminal device within a coverage of the electronic device 200, and time synchronization between the electronic device and the UEi is maintained in a conventional manner, the identifier ID_{gNB} and the synchronization information Syncinfo may be omitted from the positioning instruction PINSi.

Furthermore, the position information Pinfo and the beam-related information BMinfoi in the positioning instruction PINSi are to enable the UEi to effectively transmit the sensing signal to the positioning target, and one of the two may be alternatively included in the positioning instruction PINSi to explicitly or implicitly indicate the preliminary position P0 of the positioning target to the UEi, so that the UEi may transmit the sensing signal to the preliminary position, for example but not limited to, by using a directional beam.

In an example, the positioning instruction PINSi may include position information Pinfo that directly indicates the preliminary position P0 of the positioning target, and the terminal device may transmit the sensing signal to the positioning target based on the position information, for example, but not limited to, by using a directional beam pointing to the preliminary position.

In another example, the positioning instruction PINSi may include beam-related information BMinfoi of the sensing signal of UEi. As an example, the beam-related information BMinfoi may indicate a beam direction of a transmit beam BMi of the sensing signal and optionally a beamwidth and the like. The beam direction points to a direction in which the preliminary position P0 of the positioning target is located (relative to UEi). In the case where the electronic device 200 is a base station-side device such as the gNB in FIG. 1, the beam-related information BMinfoi may directly indicate the transmit beam BMi that the UEi needs to use for the sensing signal, and a beam direction of the transmit beam points to a direction in which the preliminary position P0 of the positioning target is located relative to UEi.

In addition to the position information Pinfo and the beam-related information BMinfoi, TimeS, TimeD, Timegap, T, Dform and other control information in the positioning instruction PINSi are for controlling a specific way that each terminal device UEi obtains and transmits sensing data, so as to facilitate the sensing processing unit 230 to uniformly process the sensing data obtained from the terminal devices to obtain a final positioning result.

For example, the form information Dform in the control information of the positioning instruction PINSi may indicate the content/entries of the sensing data DATAi that UEi needs to provide to the electronic device 200, including an identifier (ID) of the terminal device, raw data of the sensing signal and echo signal, and/or a sensing result obtained by the terminal device through preliminary processing on the raw data. In addition, the form information Dform may further indicate an order in which entries of the sensing data DATAi are arranged.

In this example, the form information Dform of the positioning instruction PINSi may indicate that the sensing data DATAi of UEi has a format Form=[IDᵢ, Rᵢ, θᵢ, RPᵢ, SNRᵢ, Δθᵢ, tᵢ], where IDᵢ represents an identifier of UEi, Rᵢ represents a distance (sensing distance) of the positioning target relative to UEi, θᵢ represents an angle (sensing angle) of the positioning target relative to UEi, RPᵢ and SNRᵢ represent an intensity and a signal-to-noise ratio of the echo signal received by UEi from the positioning target, respectively, Δθᵢ represents a beamwidth of the sensing signal, and tᵢ represents a transmission time (sensing time) of the sensing signal of UEi. In practical applications, one or more items of the data, such as RPᵢ, SNRᵢ, Δθᵢ and tᵢ may be optional.

The terminal device UEi that receives the positioning instruction PINSi may, for example, perform time synchronization according to the synchronization information Syncinfo in the positioning instruction, and then transmit the sensing signal to the positioning target at the transmission time TimeS of the sensing signal indicated by the positioning instruction PINSi by using a directional beam corresponding to the beam-related information BMinfoi or pointing to the preliminary position indicated by the position information Pinfo. Here, in a case where the preliminary position indicated by the position information Pinfo is an area (for example, a target area areaT), the terminal device may scan the area for sensing by using directional sensing beams according to the instruction.

The terminal device UEi may receive the echo signal of the sensing signal reflected by the positioning target to obtain sensing data that meets requirements of the form information in the positioning instruction. For example, in a case where the form information Dform in the positioning instruction PINSi indicates a form of the sensing data as Form=[IDᵢ, Rᵢ, θᵢ, RPᵢ, SNRᵢ, Δθᵢ, tᵢ], UEi may obtain and provide sensing data DATAi=[IDᵢ, Rᵢ, θᵢ, RPᵢ, SNRᵢ, Δθᵢ, tᵢ] according to the indicated form, including a sensing distance Rᵢ, a sensing angle θᵢ, an intensity RPᵢ and a signal-to-noise ratio SNRᵢ of the echo signal, a beamwidth Δθᵢ of the sensing signal, and a transmission time (sensing time) tᵢ of the sensing signal.

Furthermore, the terminal device UEi may transmit the obtained sensing data DATAi in the indicated form to the electronic device 200 (which is, for example, indicated by the identifier ID_{gNB} in the positioning instruction PINSi) at the transmission time TimeD of the sensing data or after a transmission interval Timegap since the transmission time TimeS of the sensing signal.

In a preferred example, the control information in the positioning instruction PINSi may additionally include information indicating a period (T) at which the terminal device UEi transmits the sensing signal and sensing data. For example, the positioning instruction PINSi=[ID_{gNB}, Syncinfo, Pinfo/BMinfoi, TimeS, TimeD/Timegap, Dform, T] is used to control each terminal device to periodically perform sensing and report sensing data, for example, at a designated period T, to obtain a more accurate positioning result.

Here, in a case where the positioning instruction PINSi indicates the period T, each UEi may obtain and report sensing data DATAi^{k} in each period, such as the k-th period (where k is a natural number), according to the period T, so that the sensing processing unit 230 of the electronic device 200 determines a positioning result PX^{k} for the positioning target in the k-th period based on the received sensing data (hereinafter, the superscript k is added to the symbol of relevant data when necessary to indicate the sensing data obtained in the k-th period and related results thereof, and the superscript k is often omitted when appropriate for simplification, which is not repeated below).

In other words, in each period, the transceiving unit 220 of the electronic device 200 may receive sensing data from multiple terminal devices, the sensing processing unit 230 may process the received sensing data to obtain a positioning result (processing details are described later), and the transceiving unit 220 may indicate (implicitly or explicitly) the obtained positioning result as an updated position of the positioning target to the multiple terminal devices, so that the terminal devices transmit sensing signals based on the updated position.

For example, in a preferred embodiment, in addition to the initial positioning instruction PINSi, the transceiving unit 220 may transmit updated position information Pinfo^{k} (or updated beam-related information BMinfoi^{k}) to the terminal device UEi according to the period T to explicitly (or implicitly) indicate to the terminal device UEi a positioning result PX^{k} for the positioning target in the k-th period as an updated position of the positioning target, so that the UEi transmits a sensing signal to the positioning target for sensing in the (k+1)-th period based on the indication of the updated position information Pinfo^{k} (or the updated beam-related information BMinfoi^{k}). In this way, the accuracy of sensing can be improved iteratively.

### (Processing on Sensing Data)

The sensing processing unit 230 may acquire or select required data from the sensing data received by the transceiving unit and perform processing to obtain a positioning result for the positioning target. For example, the sensing processing unit may perform alignment of the sensing data, quality screening of the sensing data, data selection based on the convex hull principle, fusion based on accuracy of the sensing data, and other processes to obtain the positioning result for the positioning target.

Next, further details of processing of the sensing processing unit 230 are described with an example in which the sensing data DATAi^{k} received from each of L terminal devices UEi (i=1, 2, ..., L) has a format $\left[{{ID}_{i}}^{k}, {{R}_{i}}^{k}, {{θ}_{i}}^{k}, {{RP}_{i}}^{k}, {{SNR}_{i}}^{k}, {Δθ}_{i}^{j}, {{t}_{i}}^{k}\right]$.

### Alignment of Sensing Data

The sensing processing unit 230 may extract the sensing time tᵢ^{k} from the sensing data DATAi^{k} of a terminal device UEi, sort the sensing data DATAi^{k} according to the sensing time tᵢ^{k}, and classify all sensing data at the same time as sensing data obtained in the k-th sensing or at the sensing time Timek (where Timek is, for example, consistent with tᵢ^{k} or an average of tᵢ^{k} of all UEi). For example, in a case where each terminal device performs sensing only once or performs sensing at a fixed period, the sensing processing unit 230 may omit the alignment processing.

### Quality Screening of Sensing Data

For example, for each sensing time Timek, or in each period, or in the initial positioning process, the sensing processing unit 230 may select, from the selected sensing data DATAi corresponding to the time, sensing data in which echo signals are of higher quality, i.e., echo signals have one or more quality indicators (such as SNRᵢ, SINRᵢ, and/or RPᵢ) greater than a predetermined threshold. For example, M pieces of sensing data DATAi (i=1, 2, ..., M) that meet the requirements may be selected from L pieces of sensing data. In a case of a small number of terminal devices, the sensing processing unit 230 may omit such filtering process.

### Convex Hull Selection of Sensing Data

For example, for each sensing time Timek, or in each period, or in the initial positioning process, the sensing processing unit 230 may select, from the sensing data DATAi based on the convex hull principle, sensing data that is in a minimized volume but covers a maximized spatial range and has high accuracy. The convex hull is a concept in computational geometry (graphics). In a vector space, for a given set A of vectors, an intersection of all convex sets that contain the set A is called a convex hull set of the given set A of vectors.

More specifically, the sensing processing unit 230 may be configured to: obtain an intensity RPᵢ of an echo signal and an angle (sensing angle) θᵢ of the positioning target relative to a terminal device based on sensing data DATAi of each terminal device UEi of multiple (for example, L) terminal devices; and select a portion of the sensing data from multiple (for example, L) pieces of sensing data such that sensing vectors vᵢ based on the selected (for example, N) pieces of sensing data constitute or approximately constitute a convex hull set Set of multiple sensing vectors based on the multiple (for example, L) pieces of sensing data DATAi. Here, a sensing vector based on a piece of sensing data is determined according to the intensity RPᵢ of the echo signal and the sensing angle θᵢ.

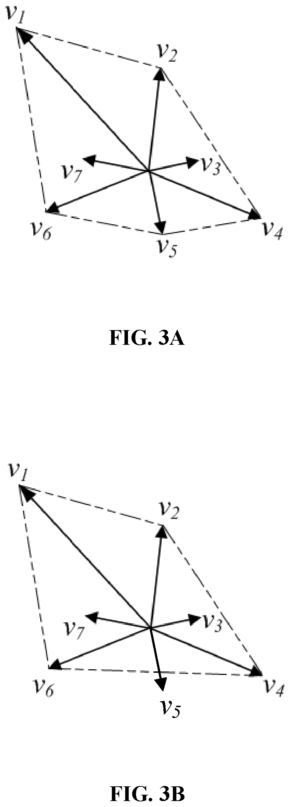

For ease of explanation, FIG. 3A and FIG. 3B provide schematic diagrams illustrating constitution or approximate constitution of a convex hull set by sensing vectors. As shown in FIG. 3A and FIG. 3B, for example, a given point may be determined as a common starting point vᵢ of all sensing vectors, a sensing angle θᵢ is determined as a direction of a sensing vector vᵢ, and a length of the sensing vector vᵢ is determined based on an intensity RPᵢ of an echo signal (so that a greater RPᵢ leads to a greater length of vᵢ), thereby obtaining L=7 sensing vectors v₁ to v₇ as shown in FIG. 3A and FIG. 3B. FIG. 3A illustrates an example of selecting N=5 sensing vectors from all sensing vectors to form a convex hull set, and FIG. 3B illustrates an example of selecting N=4 sensing vectors from 5 sensing vectors that constitute a convex hull set to approximately constitute a convex hull set.

Here, the selection of sensing vectors to "approximately constitute a convex hull set" may be achieved by selecting, from the sensing vectors that constitute the convex hull set, two or more sensing vectors with the highest intensity and the largest angular difference. In this way, a representative subset of the convex hull set is selected, which helps to further reduce the processing amount while maintaining the precision of the positioning process.

### Fusion of Sensing Data

For example, for each sensing time (or in each period), the sensing processing unit 230 fuses the selected, for example, N pieces of sensing data DATAi (i=1, 2, ..., N) to obtain a positioning result.

As an example, the sensing processing unit 230 may perform scalar fusion or vector fusion based on the accuracy of the sensing data.

Scalar fusion is considered first. The scalar fusion refers to that the sensing processing unit 230 obtains multiple preliminary positioning results for the positioning target based on sensing data from multiple terminal devices, and then perform a weighted average on these preliminary positioning results by using accuracy indicators of the sensing data (such as an intensity of the echo signal or other quality indicators, or a beamwidth of the sensing signal), so that sensing data with higher accuracy has a higher weight, thereby obtaining a fused positioning result with higher accuracy.

In this example, to perform scalar fusion, the sensing processing unit 230 may extract (obtain) partial data [Rᵢ, θᵢ, RPᵢ] from the sensing data DATAi of each UEi. The sensing processing unit 230 may obtain an absolute position P_{targeti}=(xᵢ, yᵢ) of the positioning target through simple calculation based on a sensing distance Rᵢ, a sensing angle θᵢ and an absolute position Pᵢ=(Pᵢₓ, P_{iy}) of UEi (which are obtained, for example, appropriately in the preprocessing described above), that is, xᵢ=Pᵢₓ+ Rᵢ cos(θᵢ), yᵢ=P_{iy}+Rᵢ sin(θᵢ). The sensing processing unit 230 may perform a weighted average on absolute positions by use an intensity RPᵢ of an echo signal as a weight for reflecting accuracy, that is, the final positioning result PX=(x, y) is obtained through the following equation (1): $\begin{matrix}x = {\sum }_{i = 1}^{N} {x}_{i} ⋅ \frac{{RP}_{i}}{{RP}_{1} + ⋯ + {RP}_{N}} \\ y = {\sum }_{i = 1}^{N} {y}_{i} ⋅ \frac{{RP}_{i}}{{RP}_{1} + ⋯ + {RP}_{N}}\end{matrix}$

The scalar fusion scheme has advantages of simple computation and easy precision verification. For example, the positioning precision in this scheme may be represent by a degree of deviation (for example, by calculating a standard deviation) between multiple obtained absolute positions P_{targeti}(i=1, 2, ..., N) of the positioning target, thereby serving as the positioning precision of a positioning result from scalar fusion.

In the above scalar fusion, individual accuracy indexes of the sensing data of terminal devices are used as scalar weights for weighted fusion of the sensing data, where information of direction/dimension is not considered, which may cause difficulty in obtaining a high-precision positioning result. To address this problem, a vector fusion that overcomes the drawback of scalar fusion is proposed in the present disclosure.

In the vector fusion, the sensing processing unit 230 may consider directionality (sensing direction and direction perpendicular thereto) or dimension (sensing distance and sensing angle) of accuracy indexes (intensity of the echo signal or other quality indexes, and beamwidth) of the sensing data from each terminal device; construct a sensing area where the positioning target is located and that reflects an error range of the sensing data in different directions (sensing direction and direction perpendicular thereto) or different dimensions (sensing distance and sensing angle), to reflect a multi-dimensional weight of the accuracy indexes of the sensing data, and determine an overlapping area of sensing areas corresponding to the terminal devices as a position (area) where the positioning target is located. In this way, vector fusion is achieved and the positioning result is obtained more accurately.

For example, in an example, to perform vector fusion, the sensing processing unit 230 may extract (obtain) partial data [Rᵢ, θᵢ, RPᵢ], namely the sensing distance Rᵢ, the sensing angle θᵢ and the intensity RPᵢ of the echo signal, from the sensing data DATAi of each UEi, to construct a (for example, two-dimensional) sensing area areai.

The two-dimensional sensing area areai constructed using sensing data DATAi from UEi may have the following form. A center Ci of the area is located at the sensing distance Rᵢ from the absolute position Pᵢ of UEi in the direction of the sensing angle θᵢ (sensing direction), that is, the absolute position Ci= P_{targeti} of the positioning target obtained based on Rᵢ, θᵢ and the absolute position Pᵢ of UEi. The area has a first dimension in the sensing direction and a second dimension in a direction perpendicular to the sensing direction. The first dimension represents an error in sensing distance, and a better quality/intensity of the echo signal (a higher intensity RPᵢ of the echo signal in this example) leads to a smaller value of the first dimension. The second dimension represents an error in sensing angle, and a smaller beamwidth Δθᵢ of the sensing signal leads to a smaller value of the second dimension. The sensing area may have various shapes that meet the above-mentioned requirement on center and dimension. To simplify the process, the shape of the sensing area is preferably symmetrical about the sensing direction axis, and may be, for example, a rectangle or an ellipse. The sensing area constructed in this way can intuitively reflect the direction/dimension of errors of the sensing data, thus facilitating achievement of a high-precision positioning result.

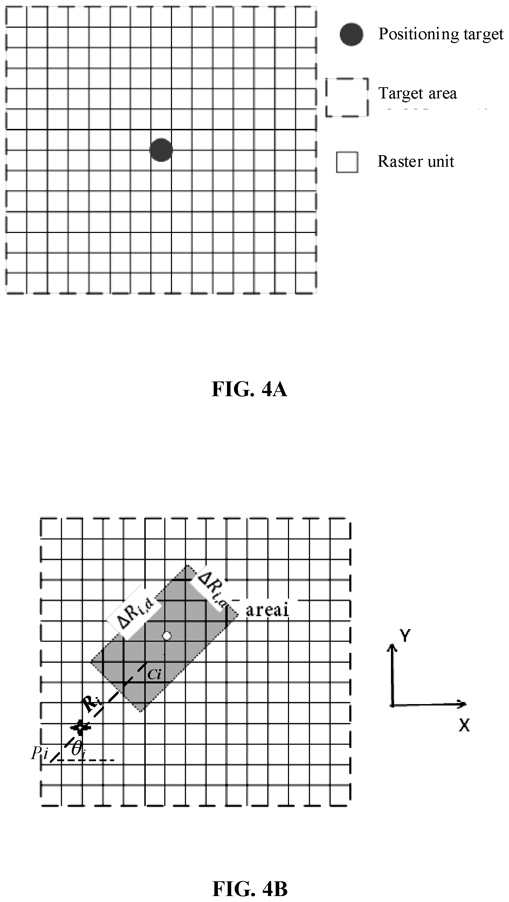

Further details of the vector fusion are described below in conjunction with a specific example and illustrations of an example process of vector fusion shown in FIG. 4A to FIG. 4D, including preprocessing (optional) of raster division as shown in FIG. 4A and construction and fusion of a sensing area as shown in FIG. 4B to FIG. 4D.

First, reference is made to FIG. 4A. To determine a positioning precision during the positioning process, the sensing processing unit 230 may preprocess the target area of the positioning target by raster division as shown in FIG. 4A. Size of the raster is determined based on a positioning requirement. A higher requirement on positioning precision leads to finer raster division, and thereby cause more computation. However, it is understood that the preprocessing of raster division is optional and may be omitted in practical applications (for example, in a case where determination of precision is not necessary or the positioning precision is determined in other ways).

Next, as shown in FIG. 4B, the sensing processing unit 230 may construct a sensing area areai representing a detection result of the UEi on the positioning target based on the sensing data DATAi of each terminal device UEi and the position Pᵢ of UEi, where the position Pᵢ of UEi serves as an anchor point. The position of the sensing area constructed in this way represents a position range of the positioning target in the target area. Dimensions of the sensing area in a first direction and a second direction respectively represent magnitude of errors of a sensing result by UEi on the target in the directions of sensing distance and sensing angle (where a smaller dimension represents a smaller sensing error).

In this example, a rectangular sensing area areai is constructed, whose center Ci located at the sensing distance Rᵢ from the absolute position Pᵢ of UEi in a direction of the sensing angle θᵢ (sensing direction), that is, an absolute position Ci=P_{target} of the positioning target obtained based on Rᵢ, θᵢ, and the absolute position Pᵢ of UEi. An axis passing through the center of the rectangle and parallel to one side is in the direction of the sensing angle θᵢ (the sensing direction). The two sides parallel to the sensing direction have a first dimension Δ*R_{i,d}*, and the other two sides have a second dimension Δ*R_{i,a}*.

As an example, the first dimension Δ*R_{i,d}* and the second dimension Δ*R_{i,a}* may be calculated with the sensing distance Rᵢ, the intensity RPᵢ of the echo signal, and the beamwidth Δθᵢ of the sensing signal, based on the following equation: ${ΔR}_{i , d} = \frac{{R}_{i}}{\sqrt{{RP}_{i}^{′}}}$ ${ΔR}_{i , a} = {R}_{i} {Δθ}_{i}^{′}$

It should be noted that in order to apply the intensity RPᵢ of the echo signal and the beamwidth Δθᵢ for calculating the length with the sensing distance, appropriate preprocessing may be performed to obtain a reference intensity RPᵢ' and a reference beamwidth ${Δθ}_{i}^{′}$ to be applied for calculation. For example, based on an ideal intensity RP_ideal of an echo signal and an ideal beamwidth Δθ_ideal of the sensing signal that leads to an ideal sensing result, a ratio of actual data may be calculated to obtain RPᵢ' = RPᵢ/Rp_ideal, and ${Δθ}_{i}^{′} = {Δθ}_{i} / Δθ _ ideal$. The above conversion is merely an example. In practical applications, those skilled in the art may calculate the first dimension and the second dimension of the sensing area through various appropriate methods according to the principle of the embodiment.

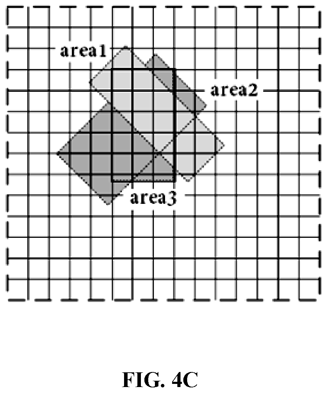

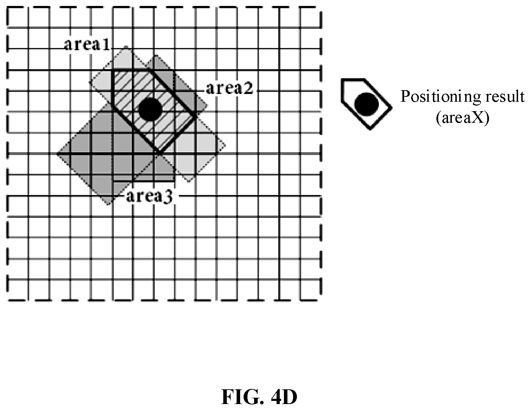

In this way, for example, in a case where three UEs, i.e., UE1, UE2, and UE3, participate in collaborative sensing, the sensing processing unit 230 may obtain three sensing areas, i.e., area1 to area3, as shown in FIG. 4C. Next, as shown in FIG. 4D, the sensing processing unit 230 may determine an overlapping area of sensing areas area1 to area3 as an area (areaX) where the positioning target is located, and may directly use this area or a center point of this area as a final fused position (positioning result) of the positioning target. Here, size of the overlapping area (areaX) in the raster area represents a positioning precision. Therefore, while obtaining the positioning result, the precision of the result is obtained advantageously.

In this way, the sensing processing unit 230 may perform vector fusion on the sensing results from the terminal devices to obtain a high-precision positioning result for the target.

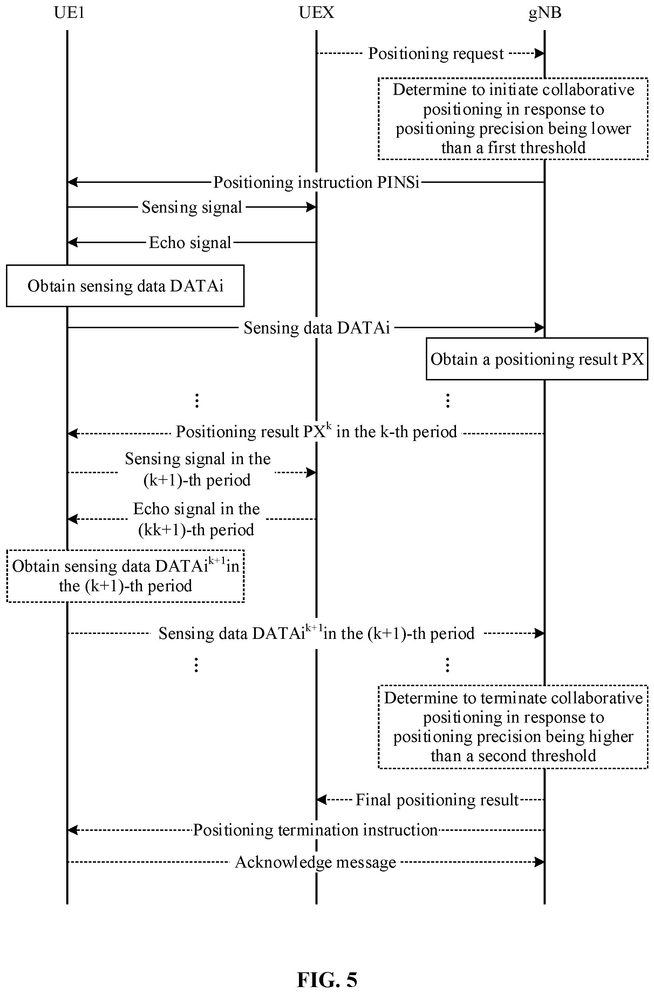

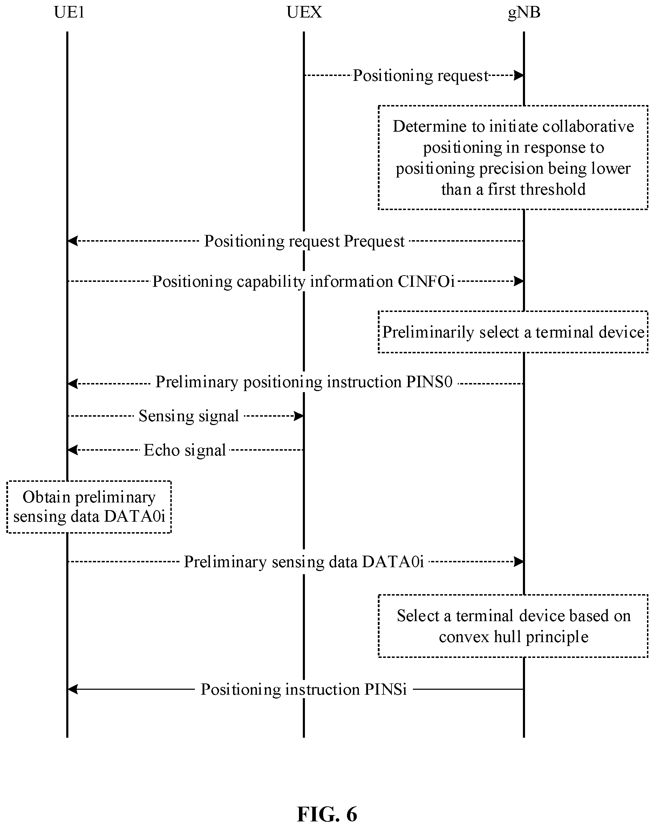

Described above are details of processing units in the electronic device. Next, a process of the electronic device 220 initiating and terminating a collaborative positioning process, further details regarding the determination/selection of the terminal device and an example flow of signaling interactions are described with reference to flowcharts of example signaling interactions between the electronic device and the terminal device (and optionally the positioning target) given in FIG. 5 and FIG. 6.

### (Initiation and Termination of Collaborative Positioning and Example Process)

The electronic device 200 may initiate collaborative positioning based on various triggering conditions, and may terminate the collaborative positioning based on various termination conditions. Relevant processing and example signaling interactions between the electronic device 200 (implemented in this example as a base station-side device gNB) and a positioning target UEX and a terminal device UEi are described with reference to the flowchart in FIG. 5.

For example, based on various triggering conditions, the electronic device 200 may generate a positioning instruction PINSi as described above using the generating unit 210 and transmitting the positioning instruction to terminal devices UEi near the positioning target using the transceiving unit 220, thereby initiating the collaborative positioning utilizing the terminal devices.

For example, the transceiving unit 220 may be configured to transmit the positioning instruction PINSi on reception of a positioning request from the positioning target UEX and/or in response to a positioning precision for the positioning target UEX (for example, precision of a preliminary positioning result for the positioning target obtained by the electronic device 200 by using the transceiving unit 220 and the sensing processing unit 230 through a conventional wireless communication and positioning method) being lower than a first precision threshold.

Upon receiving the positioning instruction PINSi, the terminal device UEi may, according to the instruction, transmit a sensing signal to the positioning target UEX and receive an echo signal to obtain sensing data DATAi, and then report the obtained sensing data DATAi to the electronic device 200.

The electronic device 200 may perform processing (for example, but not limited to, data alignment, quality screening, and selection based on the convex hull principle as described above) on the sensing data received from the terminal devices, and fuse the selected sensing data to obtain a positioning result PX for the positioning target.

Alternatively, in a case where the positioning instruction PINSi includes period information (T), the electronic device 200 may provide, through the communication unit, the terminal device UEi with a positioning result PX^{k} in each period (the k-th period, for example) as an updated position information, thereby repeatedly performing the processing on sensing data and positioning.

Subsequently, the electronic device 200 may terminate the collaborative positioning when a termination condition of the collaboration is met.

For example, the sensing processing unit 230 of the electronic device 200 may determine to terminate the collaborative positioning after the transceiving unit 220 receives a termination request from the positioning target and/or in response to a positioning precision for the positioning target obtained by the sensing processing unit 230 through collaborative positioning being higher than a second precision threshold. Preferably, the second precision threshold used for a termination condition for collaborative positioning may be slightly higher than the first precision threshold used for an initiation condition for collaborative positioning, in order to avoid frequent initiation and termination of the collaborative positioning.

As the sensing processing unit 230 determines to terminate the collaborative positioning, the electronic device 200 may generate a positioning termination instruction through the generating unit 210 and transmit the positioning termination instruction through the transceiving unit 220 to each terminal device UEi in the collaborative positioning. Upon receiving the instruction, the terminal device UEi may stop relevant processing and return an acknowledge message to the electronic device.

In this way, the electronic device 200 can initiate, execute (periodically execute in an alternative), and terminate the collaborative positioning through a series of interactions.

In an example as shown in FIG. 5, when a triggering conditions for initiating collaborative positioning is met, the electronic device 200 may generate and transmit the positioning instruction PINSi for all terminal devices UEi near the positioning target, to request the terminal devices to participate in the collaborative positioning. In this example, some terminal devices may be unable to perform sensing or provide high-quality sensing data. Since the sensing processing unit 230 can select and/or filter the obtained sensing data through various processes as described in the previous "Processing on Sensing Data" section, it is still ensured that the sensing data used for obtaining a positioning result meets the relevant requirements, which will not described in detail here.

### (Selection of Terminal Device and Example Process)

As an alternative to an implementation of requiring all terminal devices UEi near a positioning target to participate in collaborative positioning as shown in FIG. 5, when a triggering condition for initiating collaborative positioning is met, the electronic device 200 may perform pre-selection and/or selection based on the convex hull principle for the terminal devices, and transmit a formal positioning instruction PINS to only the selected terminal devices. Next, relevant processing and example signaling interactions between the electronic device 200 (implemented in this example as a base station-side device gNB) and a positioning target UEX and a terminal device UEi are described with reference to the example flowchart in FIG. 6. Apparently, the example in FIG. 6 may be appropriately combined with the example in FIG. 5, which is not described in detail here.

In an example as shown in FIG. 6, when a triggering condition for initiating collaborative positioning is met, alternatively, the electronic device 200 may obtain a preliminary position of the positioning target and information of terminal devices near the positioning target in various appropriate manners through the transceiving unit 220 and the sensing processing unit 230, generate a positioning request Prequest for all terminal devices UEi near the positioning target through the generating unit 210, and transmit (e.g., broadcast) the positioning request Prequest to all terminal devices UEi (candidate terminal devices) near the positioning target through the transceiving unit 220, to request the terminal devices to return sensing capability information CINFOi thereof.

The positioning request Prequest generated by the generating unit 210 may have a simple form of [ID_{gNB}, Cform], indicating a form of an identifier ID of the electronic device 200 and sensing capability information CINFOi to be reported by the terminal device. The sensing capability information indicated by Cform may be in a form of a bit sequence of length 2, i.e., {bit₁, bit₂}, which sequentially indicates whether the terminal device UEi has sufficient radio resources and whether other services are busy. For example, a bit sequence {0, 0} may indicate that the UEi has sufficient radio resources and that other services are not busy. Upon receiving the positioning request Prequest, the terminal device reports sensing capability information CINFOi to the electronic device 200 in a form of bit sequence {bit₁, bit₂} as indicated by Cform.

The electronic device 200 may select, through the sensing processing unit 230, terminal devices from the candidate terminal devices to participate in subsequent processing, based at least in part on the received sensing capability information CINFOi. For example, the sensing processing unit 230 may select a terminal device UEi whose bit sequence of CINFOi is {0, 0} to participate in subsequent processing.

Furthermore, for example, after the optional preliminary selection process described above, the electronic device 200 may generate, through the generating unit 210, a preliminary positioning instruction PINS0 for all (or preliminarily selected) terminal devices UEi (hereinafter referred to as candidate terminal devices) near the positioning target; and transmit (e.g., broadcast), through the transceiving unit 220, the preliminary positioning instruction PINS0 to the terminal devices UEi to instruct the terminal devices to perform preliminary sensing processing and provide preliminary sensing data DATAi. Thereby, the sensing processing unit 230 may select, based on the obtained preliminary sensing data DATAi in accordance with the described convex hull principle, a portion of the terminal devices for participating in the subsequent collaborative positioning.

As an example, the preliminary positioning instruction PINS0 generated by the generating unit 210 may have a form similar to but simpler than the positioning instruction PINSi.

For example, the preliminary positioning instruction PINS0 may be PINS0=[ ID_{gNB}, Pinfo, Dform0], indicating an identifier ID of the electronic device 200, a preliminary position P0 of the positioning target, and a form of preliminary sensing data DATA0i to be reported by a collaborative terminal. Here, since a preliminary sensing process is only for preliminary screening of the terminal devices and does not need to be performed periodically and may be performed, for example, instantly, information about time or period is omitted from the preliminary positioning instruction PINS0. Furthermore, since the preliminary sensing data is for selection based on the convex hull principle, the form of the preliminary sensing data indicated by Dform0 may be a simplified version of the sensing data, such as Form0=[IDᵢ, θᵢ, RPᵢ], that is, only the identifier representing UEi, the sensing angle θᵢ, and the intensity RPᵢ of an echo signal of UEi are retained for selection based on the convex hull principle. Alternatively, Dform0 may indicate that Form0 has more items in Form, which is not described in detail here.

Each terminal device UEi that receives the preliminary positioning instruction PINS0 may, according to the instruction, for example but not limited to, transmit a sensing signal to the positioning target using a directional beam pointing to the preliminary position P0 of the positioning target, and obtain preliminary sensing data DATA0i in the form of Dform0 to report to the electronic device 200. Here, in a case where the electronic device 200 does not perform preliminary selection of terminal devices based on sensing capability information, each terminal device UEi may determine whether to participate in collaborative positioning based on a factor such as whether radio resources of the terminal device are sufficient and/or whether other services are busy, and perform the preliminary sensing process only in a case where the radio resources are sufficient and/or other services are not busy.

The transceiving unit 220 may receive preliminary sensing data DATA0i ([IDᵢ, θᵢ, RPᵢ]) from a candidate terminal device. The sensing processing unit 230 may obtain an intensity RPᵢ of the echo signal and an angle θᵢ of the positioning target relative to the terminal device based on the preliminary sensing data DATA0i received by the transceiving unit 220, and select, from the candidate terminal devices, multiple terminal devices such that multiple preliminary sensing vectors v0i based on preliminary sensing data of the selected multiple terminal devices constitute or approximately constitute a convex hull set Set₀ of all preliminary sensing vectors based on preliminary sensing data of all candidate terminal devices. Here, a preliminary sensing vector based on preliminary sensing data is determined according to the intensity of the echo signal and the sensing angle obtained based on the preliminary sensing data.

In the above preliminary selection process, the sensing processing unit 230 may determine the preliminary sensing vector v₀ᵢ based on the preliminary sensing data, for example, in a manner similar to that described previously for determining sensing vector vᵢ based on sensing data DATAi, and may construct/approximately construct the convex hull set Set0 of preliminary sensing vectors v₀ᵢ in a manner similar to that described previously for constructing/approximately constructing a convex hull set Set of sensing vectors, which are not described in further detail here.

Then, the electronic device 200 may transmit a formal positioning instruction PINSi to the terminal devices selected based on the convex hull principle to instruct the terminal devices to participate in collaborative positioning as described above (that is, to formally initiate the collaborative positioning).

With the pre-selection based on the convex hull principle, terminal devices capable of providing representative sensing data can be pre-selected from all terminal devices near the positioning target to participate in the collaborative positioning, which facilitates in reducing processing load and maintaining positioning precision.

Described above is the electronic device 200 (such as the base station-side device gNB in FIG. 1, FIG. 5, and FIG. 6) for controlling collaborative positioning according to the first embodiment of the present disclosure. The electronic device 200 can perform positioning by using sensing signals from multiple terminal devices near the positioning target, which facilitates high-precision positioning with a relatively low cost and is applicable to situations with building obstructions, such as indoor environments.

In the above description, in addition to the electronic device 200 configured to control the collaborative positioning, a terminal device (such as UEi in FIG. 1) that provides sensing data about the positioning target in response to the positioning instruction transmitted from the electronic device 200 is further described. In other words, according to the present disclosure, in addition to the electronic device for controlling collaborative positioning (the first embodiment), a terminal device for participating in the collaborative positioning (a second embodiment) is further proposed. Hereinafter, a terminal device participating in collaborative positioning according to the second embodiment of the present disclosure is described based on the description of the electronic device for controlling collaborative positioning according to the first embodiment of the present disclosure, and unnecessary details are omitted.

### [3. Configuration Example of Terminal Device]

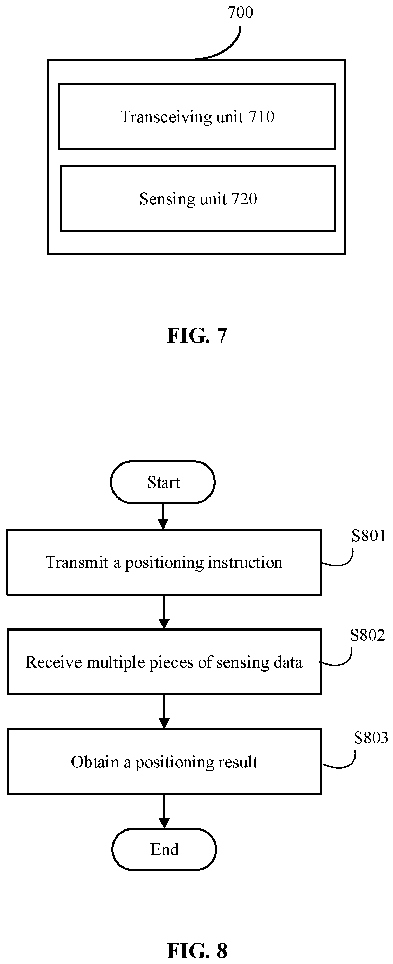

FIG. 7 is a block diagram illustrating an exemplary configuration of a terminal device according to a second embodiment of the present disclosure.

As shown in FIG. 7, the terminal device 700 may include a transceiving unit 710 and a sensing unit 720. In addition, although not shown in the figure, the terminal device 700 may further include a storage unit.

Here, units of the terminal device 700 may be included in processing circuitry. It should be noted that the terminal device 700 may include a single processing circuit or multiple processing circuits. Further, the processing circuitry may include various discrete functional units for performing various different functions and/or operations. It should be noted that these functional units may be physical entities or logical entities, and units with different names may be implemented by a same physical entity.

According to an embodiment of the present disclosure, the transceiving unit 710 of the terminal device 700 may be configured to receive a positioning instruction from an electronic device, and, based on the positioning instruction, transmit a sensing signal to a positioning target and receive an echo signal, so that the sensing unit 720 obtains sensing data. The sensing unit 720 may be configured to obtain sensing data based on the sensing signal and the echo signal according to the positioning instruction. The transceiving unit 710 may be configured to transmit the sensing data obtained by the sensing unit 720 to the electronic device, for the electronic device to process multiple pieces of sensing data from multiple terminal devices to obtain a positioning result for the positioning target.

Here, the electronic device that transmits the positioning instruction to the terminal device 700 may be, for example, the electronic device 200 described with reference to FIG. 2 (such as the gNB in the example shown in FIG. 1), and the terminal device 700 may be a terminal device near the positioning target (such as the UEi in the example shown in FIG. 1).

Alternatively, to cooperate with the electronic device controlling collaborative positioning to determine the terminal device near the positioning target, the terminal device 700 may interact with the electronic device as necessary through transceiving unit 710, so that the electronic device is aware of position information of the terminal device 700 and thereby determine that the terminal device 700 is near the positioning target. For example, in a case where the electronic device controlling the collaborative positioning is a base station-side device and the terminal device 700 is within a coverage of the electronic device, the transceiving unit 710 may transmit and receive a reference signal to and from the electronic device, for the electronic device to perform various existing positioning processes to obtain a position of the terminal device 700, which is not described in detail here. Furthermore, for example, in a case where the terminal device 700 has a GPS positioning function, the terminal device may directly report its position to the electronic device through the transceiving unit 710.

The positioning instruction received by the transceiving unit 710 of the terminal device 700 from the electronic device controlling collaborative positioning may include control information regarding a time and/or manner in which the terminal device transmits a sensing signal to the positioning target and/or transmits sensing data to the electronic device. Preferably, the positioning instruction may indicate a preliminary position of the positioning target or include beam-related information of the sensing signal. In addition, preferably, the positioning instruction may indicate a format of the sensing data, such as requiring the sensing data to indicate an intensity and quality of the echo signal and an angle (sensing angle) and/or distance (sensing distance) of the positioning target relative to the terminal device, and/or requiring the sensing data to include beam-related information of the sensing signal (for example, but not limited to, beamwidth information).

Correspondingly, the transceiving unit 710 may transmit a sensing signal to the positioning target according to the time and/or manner indicated by the control information in the positioning instruction. Preferably, the transceiving unit 710 may transmit the sensing signal to the positioning target using a directional beam based on the positioning instruction (for example, based on the preliminary position indicated by the positioning instruction and/or the beam-related information included in the positioning instruction), and may receive the echo signal reflected from the positioning target.

Furthermore, the sensing unit 720 may be configured to obtain sensing data, for example, in accordance with the positioning instruction from the electronic device (for example, the format or form of sensing data required by the positioning instruction), based on the sensing signal transmitted to the positioning target by the transceiving unit 710 and the echo signal received from the positioning target.

Depending on the requirement of the positioning instruction, in addition to obtaining raw data of the sensing signal and the echo signal, the sensing unit 720 may further perform preliminary processing on the raw data to obtain a sensing result, and use all or part of the data and result as the sensing data to be provided to electronic device.

For example, the raw data of the sensing signal and the echo signal obtained by the sensing unit 720 may include, but is not limited to: a transmission time of the sensing signal (sensing time), a reception time of the echo signal, a time delay of the echo signal relative to the sensing signal, an intensity of the echo signal (for example, but not limited to, the received power of the echo signal), a quality of the echo signal (for example, but not limited to, a SNR and a SINR of the echo signal), a phase/angle/beam-related information of the sensing signal and the echo signal respectively, and/or Doppler information.

In addition, the sensing result obtained by the sensing unit 230 from the preliminary processing on the raw data may include, but is not limited to, an angle and distance (sensing angle and sensing distance) of the positioning target relative to the terminal device.

The sensing unit 230 may obtain the raw data and the sensing result through various appropriate processes (e.g., various existing processes). For example, the sensing unit 230 may obtain a desired intensity and signal quality by measuring the intensity of the received echo signal (for example, but not limited to a received power of the echo signal) and the signal quality (SNR, SINR) of the received echo signal. In addition, the sensing unit 230 may detect echo signals in various directions and determine the orientation or angle (sensing angle) of the positioning target relative to the terminal device based on detection results (for example, an orientation of a detected echo signal). In addition, the sensing unit 230 may determine the distance (sensing distance) of the positioning target relative to the terminal device based on a phase difference between the echo signal and the sensing signal. The manner in which the sensing unit 230 obtains the sensing data is not limited in the present disclosure.

Preferably, the sensing data obtained by the sensing unit 230 and provided to the transceiving unit 210 is able to indicate the intensity of the echo signal, the quality of the echo signal, the sensing angle and/or the sensing distance, and the like (for example, such information may be directly included or relevant raw data may be included to be processed by the electronic device). Furthermore, preferably, the sensing unit 230 may include beam-related information of the sensing signal (such as, but not limited to, beamwidth information) in the provided sensing data.

The transceiving unit 710 may be configured to transmit the sensing signal obtained by the sensing unit 720 to the electronic device in accordance with the time and manner indicated by the positioning instruction. In this way, for example, in a case where the electronic device transmits a unified or similar positioning instruction to each of the terminal devices, the sensing data provided by the terminal devices, including the terminal device 700, to the electronic device may be obtained by sensing the positioning terminal within a same or at least similar time period, and may have the same format, thereby facilitating unified processing by the electronic device.

Described above are a basic configuration of the terminal device and processing performed by units of the terminal device. Next, relevant processing and further details of information/data involved are described with specific examples.

First, further details of processing performed by the transceiving unit 710 and the sensing unit 720 are described in detail in conjunction with an example of the positioning instruction PINS (or PINSi) received by the transceiving unit 710.

As described in embodiments of the electronic device controlling collaborative positioning, the positioning instruction PINSi (or control information thereof) generated by the electronic device controlling collaborative positioning may include various specific information. The information includes, but is not limited to: position information Pinfo of a preliminary position P0 of the positioning target or beam-related information BMinfoi of a sensing signal of the terminal device (one of the two is alternatively included), a transmission time TimeS of the sensing signal, a transmission time TimeD of the sensing data or a transmission interval Timegap between the sensing data and the sensing signal (one of the two is alternatively included), a period T for transmitting the sensing data and the sensing signal (alternatively included), and form information Dform regarding a transmission form of the sensing data (content or entries of the sensing data, a packaging method, and the like). Alternatively, the positioning instruction PINS may further include an identity or identifier ID, such as ID_{gNB}, of the electronic device controlling collaborative positioning and synchronization information Syncinfo for synchronization.

In an example, the positioning instruction received by the transceiving unit 710 of the terminal device 700 may be PINSi=[ID_{gNB}, Syncinfo, Pinfo/BMinfoi, TimeS, TimeD/Timegap, Dform].

After the positioning instruction is received, the transceiving unit 710 may perform time synchronization with the electronic device represented by ID_{gNB} according to the instruction of the synchronization information Syncinfo. In a case where the electronic device is a gNB as shown in FIG. 1, the terminal device 700 is within a coverage of the electronic device, and time synchronization between the electronic device and the terminal device is maintained in a conventional manner, the identifier ID_{gNB} and the synchronization information Syncinfo may be omitted from the positioning instruction PINS received by the transceiving unit 710, and relevant synchronization may be omitted.

The terminal device 700 that receives the positioning instruction PINSi may (for example, perform time synchronization according to the synchronization information Syncinfo in the positioning instruction and then) transmit the sensing signal to the positioning target at the transmission time TimeS of the sensing signal indicated in the positioning instruction PINSi by the transceiving unit 710 by using a directional beam corresponding to the beam-related information BMinfoi or pointing to the preliminary position indicated by the position information Pinfo. Here, in a case where the preliminary position indicated by the position information Pinfo is an area (for example, a target area areaT), the sensing unit 710 may scan the area for sensing by using directional sensing beams according to the instruction.

The transceiving unit 710 may receive the echo signal of the sensing signal reflected by the positioning target. The sensing unit 720 may obtain sensing data that meets the requirement of the form information in the positioning instruction through appropriately processing based on raw data of the sensing signal and echo information. For example, in a case where the form information Dform in the positioning instruction PINSi indicates a form of the sensing data as Form=[IDᵢ, Rᵢ, θᵢ, RPᵢ, SNRᵢ, Δθᵢ, tᵢ], the sensing unit 720 may obtain sensing data according to the indicated form, including a sensing distance Rᵢ, a sensing angle θᵢ, an intensity RPᵢ and a signal-to-noise ratio SNRᵢ of the echo signal, a beamwidth Δθᵢ of the sensing signal, and a transmission time (sensing time) tᵢ of the sensing signal, and transmit the data together with an identifier IDᵢ thereof and optionally a beamwidth Δθᵢ of the sensing signal, in the indicated form DATAi=[IDᵢ, Rᵢ, θᵢ, RPᵢ, SNRᵢ, Δθᵢ, tᵢ], to the electronic device for controlling collaborative positioning.

Furthermore, the transceiving unit 710 of the terminal device 700 may transmit the obtained sensing data DATAi in the indicated form to the electronic device (which is, for example, indicated by the identifier ID_{gNB} in the positioning instruction PINSi) at the transmission time TimeD of the sensing data or after a transmission interval Timegap since the transmission time TimeS of the sensing signal.

In a preferred example, the control information in the positioning instruction PINSi may additionally include information indicating a period (T) at which the terminal device transmits the sensing signal and sensing data. For example, the positioning instruction PINSi=[ ID_{gNB}, Syncinfo, Pinfo/BMinfoi, TimeS, TimeD/Timegap, Dform, T] is used to control the terminal device 700 to periodically perform sensing and report sensing data, for example, at a designated period T, to obtain a more accurate positioning result.

For example, in a case where the positioning instruction PINSi indicates a period T, in each period, such as the k-th period, the transceiving unit 710 may transmit a sensing signal to the positioning target and receive an echo signal. The sensing unit 720 may obtain sensing data DATAi^{k}. The transceiving unit 710 may transmit the obtained sensing data DATAi^{k} to the electronic device, so that the electronic device determines a positioning result PX^{k} for the positioning target in the period based on the sensing data received from the terminal devices.

Subsequently, in the (k+1)-th period, the transceiving unit 710 may receive updated position information Pinfo^{k} (or updated beam-related information BMinfoi^{k}) from the electronic device 200, so that the positioning result PX^{k} for the positioning target in the k-th period is explicitly (or implicitly) indicated to the transceiving unit 710 as an updated position of the positioning target. The transceiving unit 710 may transmit a sensing signal to the positioning target for sensing in the (k+1)-th period based on the updated position information Pinfo^{k} (or the updated beam-related information BMinfoi^{k}), and the sensing unit 720 may obtain a sensing result correspondingly. The transceiving unit 710 reports the sensing result as sensing data in the (k+1)-th period to the electronic device for determining a positioning result in the (k+1)-th period. In this way, the accuracy of sensing can be improved iteratively.

Described above are a basic configuration of the terminal device 700 and basic processing and some examples of processing units in the terminal device.

In addition to the basic processing described above, the terminal device 700 may perform various example processing performed by the terminal device UEi in the embodiment of the electronic device 200 controlling collaborative positioning through units in the terminal device 700, which is not described in detail here, but only relevant processes in the example flow described with reference to FIG. 5 and FIG. 6 are briefly described.

In an example as shown in FIG. 5, an electronic device (gNB) for controlling collaborative positioning may generate a positioning instruction PINSi based on various triggering conditions and transmit the positioning instruction to a terminal device 700, marked as UEi for example, near the positioning target, to directly initiate a collaborative positioning process by the terminal device. Furthermore, in response to a termination condition of positioning is met, the electronic device for controlling collaborative positioning may terminate the collaborative positioning process and transmit a positioning termination instruction to the terminal device 700. Upon receiving the instruction, the terminal device 700 may stop relevant processing of the transceiving unit 710 and the sensing unit 720, and generate an acknowledgment message through the sensing unit 720 and provide the acknowledgment message to the electronic device through the transceiving unit 710.

In addition, in an example as shown in FIG. 6, the electronic device (gNB) for controlling collaborative positioning may generate a positioning request Prequest to request a terminal device 700, marked as UEi for example, near the positioning target to provide positioning capability information, and/or may generate a preliminary positioning instruction PINS0 to request the terminal device 700 to perform a preliminary sensing process. The terminal device 700 may, through the transceiving unit 710 and the sensing unit 720, generate the positioning capability information CINFOi and/or obtain the preliminary sensing data DATA0i according to the requirement in the positioning request Prequest and/or the preliminary positioning instruction PINS0, and provide the information and/or data to the electronic device through the transceiving unit 710.

As an example, the positioning request Prequest received by the terminal device 700 may be in a form [ID_{gNB}, Cform], indicating a form of an identifier ID of the electronic device for controlling collaborative positioning and sensing capability information CINFOi to be reported by the terminal device. The sensing capability information indicated by Cform may be in a form of a bit sequence of length 2, i.e., {bit₁, bit₂}, which sequentially indicates whether the terminal device has sufficient radio resources and whether other services are busy. In a case where the radio resources are sufficient and other services are not busy, the terminal device 700 may generate a bit sequence {0, 0} through the sensing unit 720 as the sensing capability information, and transmit the sensing capability information through the transceiving unit 710 to the electronic device that controls the collaborative positioning. Thereby, the electronic device may determine whether to select the terminal device to participate in subsequent processing based at least in part on the received sensing capability information.

In addition, as an example, the preliminary positioning instruction PINS0 received by the terminal device 700 may be PINS0=[ ID_{gNB}, Pinfo, Dform0], indicating an identifier ID of the electronic device for controlling collaborative positioning, a preliminary position P0 of the positioning target, and a form of preliminary sensing data DATA0i to be reported by a collaborative terminal.

Upon receiving the preliminary positioning instruction PINS0, the terminal device 700 may transmit the sensing signal and receive the echo signal through the transceiving unit 710 according to the instruction. The sensing unit 720 may provide the identifier of UEi, the sensing angle θᵢ, and the intensity RPᵢ of UEi echo signal, in a form of preliminary sensing data indicated by Dform0, such as Form0=[IDᵢ, θᵢ, RPᵢ], as preliminary sensing data DATA0i to the electronic device for selection based on the convex hull principle.

Described above is the terminal device 700 (such as UEi in FIG. 1, FIG. 5, and FIG. 6) according to the second embodiment of the present disclosure. The terminal device 700 may serve as one of multiple terminal devices near the positioning target and participate in collaborative positioning under the control of, for example, the electronic device 200 according to the first embodiment (such as gNB in FIG. 1, FIG. 5, and FIG. 6), thereby enabling the electronic device to achieve high-precision positioning in a relatively low-cost manner, which facilitates application in situations with building obstructions, such as indoor environments.

### <4. Method Embodiment>

Corresponding to the apparatus embodiments, the present disclosure provides the following method embodiments.

FIG. 8 is a flowchart illustrating an exemplary process of a positioning method according to a first embodiment of the present disclosure.

As shown in FIG. 8, in step S801, a positioning instruction may be transmitted to each of multiple terminal devices near a positioning target to instruct the terminal device to transmit a sensing signal to the positioning target and receive an echo signal to obtain sensing data.

Next, in step S802, multiple pieces of sensing data may be received from the multiple terminal devices.

In step S803, the received sensing data may be processed to obtain a positioning result for the positioning target.

As an example, the positioning instruction transmitted in step S801 may include control information regarding a time and/or manner in which the terminal device transmits the sensing signal and/or the sensing data.

For example, the positioning instruction may include and/or indicate a preliminary position of the positioning target. In addition, the positioning instruction may include beam-related information of the sensing signal.

As an example, the sensing data received in step S802 may be provided by the terminal device according to the time and/or manner indicated by the control information in the positioning instruction.

For example, the sensing data may include beam-related information of the sensing signal. In addition, the sensing data may indicate an intensity of the echo signal and an angle of the positioning target relative to the terminal device.

In addition, in an alternative example, the control information in the positioning instruction may further indicate a period at which the terminal device transmits the sensing signal and the sensing data.

In the example, step S802 and step S803 may be performed in each period, that is, in each period, multiple pieces of sensing data are received and the received sensing data are processed to obtain a positioning result. In addition, although not shown in the figure, this example may further include an additional step of transmitting the obtained positioning result in each period to the multiple terminal devices as an updated position of the positioning target.

In addition, as an example, in step S803, sensing data in which the echo signals are of high quality may be selected from the multiple pieces of sensing data, and the selected sensing data may be fused to obtain the positioning result.

In addition, in step S803, alternatively or additionally, the sensing data may be selected based on a convex hull principle to obtain the positioning result. For example, a portion of sensing data may be selected from the multiple pieces of sensing data, such that sensing vectors based on the selected sensing data constitute or approximately constitute a convex hull set of sensing vectors based on the multiple pieces of sensing data, where the sensing vectors based on the sensing data are determined according to the intensity and the angle. The selected sensing data may be processed to obtain the positioning result.

Furthermore, although not shown in the figure, in an alternative example, the convex hull principle may be applied in advance to select a terminal device, for example, before step S801.

For example, before the step S801 of transmitting the positioning instruction, the following processing may be additionally performed: transmitting a preliminary positioning instruction to each of candidate terminal devices near the positioning target to instruct the candidate terminal device to transmit a sensing signal to the positioning target and receive an echo signal to obtain preliminary sensing data; receiving the preliminary sensing data from the candidate terminal device, and obtaining, based on the preliminary sensing data, an intensity of the echo signal and an angle of the positioning target relative to the terminal device; and selecting, from the candidate terminal devices, the multiple terminal devices such that multiple preliminary sensing vectors based on preliminary sensing data of the multiple terminal devices constitute or approximately constitute a convex hull set of all preliminary sensing vectors based on preliminary sensing data of all candidate terminal devices, where a preliminary sensing vector based on preliminary sensing data is determined according to the intensity and the angle obtained based on the preliminary sensing data.

Furthermore, although not shown in the figure, this example method may be initiated based on a variety of conditions. For example, the positioning instruction may be transmitted on reception of a positioning request from the positioning target and/or in response to a positioning precision of the positioning target being lower than a precision threshold.

According to an embodiment of the present disclosure, a subject that performs the method may be the electronic device 200 according to the embodiment of the present disclosure. Therefore, the previous embodiments of the electronic device 200 are applicable here.

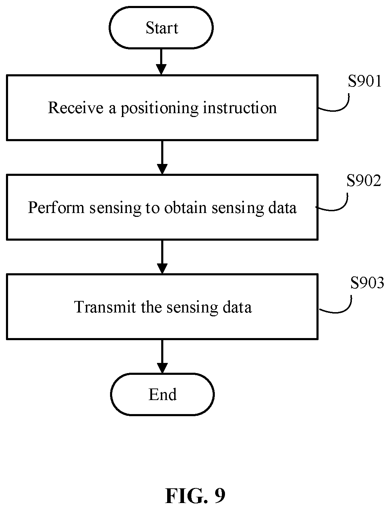

FIG. 9 is a flowchart illustrating an exemplary process of a positioning method according to a second embodiment of the present disclosure.

As shown in FIG. 9, in step S901, a positioning instruction may be received from an electronic device.

Next, in step S902, based on the positioning instruction, a sensing signal may be transmitted to a positioning target and an echo signal is received to obtain sensing data.

In step S903, based on the positioning instruction, a sensing signal may be transmitted to the positioning target and an echo signal is received to obtain sensing data.

As an example, the positioning instruction transmitted in step S901 may include control information regarding a time and/or manner in which the terminal device transmits the sensing signal and/or the sensing data.

For example, the positioning instruction may include and/or indicate a preliminary position of the positioning target. In addition, the positioning instruction may include beam-related information of the sensing signal.

As an example, in step S902 and step S903, the sensing signal and/or the sensing data may be transmitted according to the time and/or manner indicated by the control information in the positioning instruction. For example, in step S902, the sensing signal may be transmitted to the positioning target by using a directional beam. Further, in step S902, the sensing data may be obtained according to the manner indicated by the control information. In addition, in step S903, the obtained sensing data may be transmitted to the electronic device according to the time and/or manner indicated by the control information.

In addition, in an alternative example, the control information in the positioning instruction may further indicate a period at which the terminal device transmits the sensing signal and the sensing data. In the example, step S902 and step S903 may be performed in each period, that is, in each period, a sensing signal is transmitted to a position of the positioning target and an echo signal is received to obtain sensing data, and the obtained sensing data is transmitted to the electronic device. In addition, although not shown in the figure, this example may further include an additional step of receiving a positioning result from the electronic device in each period as an updated position of the positioning target (to be used in the next period, for example).

According to an embodiment of the present disclosure, a subject that performs the method may be the terminal device 700 according to the embodiment of the present disclosure. Therefore, the previous embodiments of the terminal device 200 are applicable here.

### <5. Application example>

The technology of the present disclosure is applicable to various products.

For example, the electronic device in the first embodiment may be implemented on the base station side. The electronic device may be implemented, for example, as a base station device in any type, such as a macro eNB and a small eNB, or may be implemented as a gNB (a base station in a 5G system) in any type. The small eNB may be an eNB covering a cell smaller than a macro cell, such as a pico eNB, a micro eNB, or a home (femto) eNB. Alternatively, the base station may be implemented as any other type of base station, such as a NodeB or a base transceiver station (BTS). The base station may include: a body (which is also referred to as a base station device) configured to control wireless communications; and one or more remote radio heads (RRHs) arranged at a different place from the body.

In addition, the electronic device in the first embodiment may be implemented as a TRP in any type. The TRP may have functions of transmitting and receiving. For example, the TRP may receive information from a user equipment and a base station device, and may transmit information to a user equipment and a base station device. In a typical example, the TRP may provide services to the user equipment and is controlled by the base station device. Furthermore, the TRP may have a similar structure to that of the base station device, or may have merely a structure related to information transmitting and receiving in the base station device.

Furthermore, the terminal device in the second embodiment may be various user equipment, which may be implemented as a terminal device (such as a smart phone, a tablet personal computer (PC), a notebook PC, a portable game terminal, a portable/dongle-type mobile router, and a digital camera) or a vehicle-mounted terminal (such as an automobile navigation device). The user equipment may be implemented as a terminal that performs machine-to-machine (M2M) communications (which is also referred to as a machine type communication (MTC) terminal). Furthermore, the user equipment may be a wireless communication module (such as an integrated circuit module including a single wafer) installed on each user equipment described above.

### [Application Examples of Base Station]

### (First Application Example)

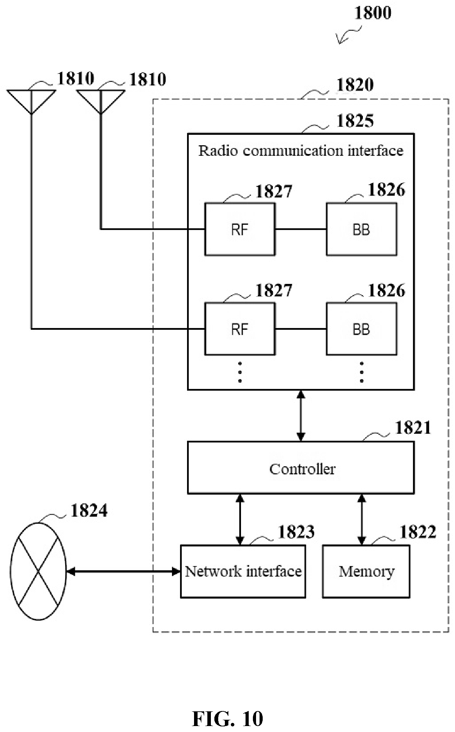

FIG. 10 is a block diagram showing a first example of a schematic configuration of an eNB to which the technology of the present disclosure is applicable. An eNB 1800 includes one or more antennas 1810 and a base station device 1820. The base station device 1820 and each of the antennas 1810 may be connected to each other via a RF cable.

Each of the antennas 1810 includes a single or multiple antenna elements (such as multiple antenna elements included in a multi-input multi-output (MIMO) antenna), and is used for the base station device 1820 to transmit and receive radio signals. As shown in FIG. 10, the eNB 1800 may include multiple antennas 1810. For example, the multiple antennas 1810 may be compatible with multiple frequency bands used by the eNB 1800. Although FIG. 10 illustrates an example in which the eNB 1800 includes multiple antennas 1810, the eNB 1800 may include a single antenna 1810.

The base station device 1820 includes a controller 1821, a memory 1822, a network interface 1823, and a radio communication interface 1825.

The controller 1821 may be, for example, a CPU or a DSP, and operates various functions of a higher layer of the base station device 1820. For example, the controller 1821 generates a data packet based on data in a signal processed by the radio communication interface 1825, and transfers the generated packet via the network interface 1823. The controller 1821 may bundle data from multiple baseband processors to generate a bundled packet, and transfer the generated bundled packet. The controller 1821 may have logical functions of performing control such as radio resource control, radio bearer control, mobility management, admission control, and scheduling. The control may be performed in conjunction with a nearby eNB or a core network node. The memory 1822 includes an RAM and an ROM, and stores a program executed by the controller 1821 and various types of control data (such as a terminal list, transmission power data, and scheduling data).

The network interface 1823 is a communication interface for connecting the base station device 1820 to a core network 1824. The controller 1821 may communicate with the core network node or another eNB via the network interface 1823. In this case, the eNB 1800 and the core network node or another eNB may be connected to each other through a logical interface (such as an S1 interface and an X2 interface). The network interface 1823 may be a wired communication interface or a radio communication interface for a wireless backhaul line. In a case that the network interface 1823 is a radio communication interface, the network interface 1823 may use a higher frequency band for wireless communications than a frequency band used by the radio communication interface 1825.

The radio communication interface 1825 supports any cellular communication scheme (such as Long-Term Evolution (LTE) and LTE-Advanced), and provides wireless connection to a terminal in a cell of the eNB 1800 via the antenna 1810. The radio communication interface 1825 may typically include, for example, a baseband (BB) processor 1826 and an RF circuit 1827. The BB processor 1826 may perform, for example, coding/decoding, modulation/demodulation and multiplexing/de-multiplexing, and perform various types of signal processes of layers (for example, L1, media access control (MAC), radio link control (RLC) and packet data convergence protocol (PDCP)). Instead of the controller 1821, the BB processor 1826 may have a part or all of the above-mentioned logical functions. The BB processor 1826 may be a memory storing a communication control program, or a module including a processor and a related circuit configured to execute the program. Updating the program may change the functions of the BB processor 1826. The module may be a card or blade inserted into a slot of the base station device 1820. Alternatively, the module may be a chip mounted on a card or blade. In addition, the RF circuit 1827 may include, for example, a mixer, a filter and an amplifier, and transmit and receive a radio signal via the antenna 1810.

As shown in FIG. 10, the radio communication interface 1825 may include multiple BB processors 1826. For example, the multiple BB processors 1826 may be compatible with multiple frequency bands used by the eNB 1800. As shown in FIG. 10, the radio communication interface 1825 may include multiple RF circuits 1827. For example, the multiple RF circuits 1827 may be compatible with multiple antenna elements. Although FIG. 10 illustrates an example in which the radio communication interface 1825 includes multiple BB processors 1826 and multiple RF circuits 1827, the radio communication interface 1825 may include a single BB processor 1826 or a single RF circuit 1827.

In the eNB 1800 shown in FIG. 10, the transceiving unit in the electronic device 200 described with reference to FIG. 2 may be implemented through the radio communication interface 1825 and an optional antenna 1810. At least part of the functions of the generating unit and the sensing processing unit in the electronic device 200 may be implemented by the controller 1821. For example, the controller 1821 may implement at least part of the functions of the generating unit and/or sensing processing unit by executing instructions stored in the memory 1822. The storage unit in the electronic device 200 may be implemented through the memory 1822.

### (Second Application Example)

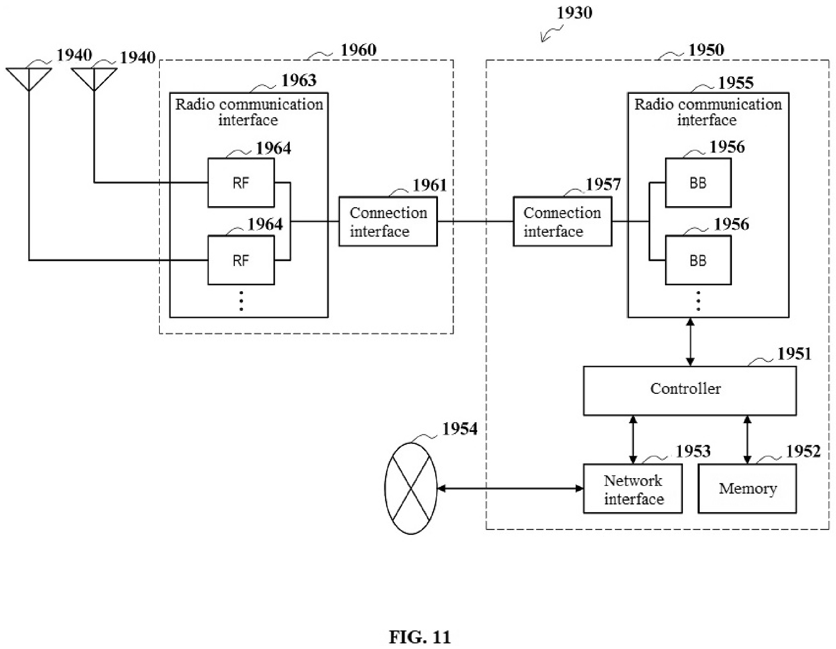

FIG. 11 is a block diagram showing a second example of a schematic configuration of an eNB to which the technology of the present disclosure is applicable. An eNB 1930 includes a single or multiple antennas 1940, a base station device 1950 and an RRH 1960. The RRH 1960 and each of the antennas 1940 may be connected to each other via an RF cable. The base station device 1950 and the RRH 1960 may be connected to each other via a high-speed line such as an optical fiber cable.

Each of the antennas 1940 includes a single or multiple antenna elements (such as multiple antenna elements included in a MIMO antenna), and is used for the RRH 1960 to transmit and receive a radio signal. As shown in FIG. 11, the eNB 1930 may include multiple antennas 1940. For example, the multiple antennas 1940 may be compatible with multiple frequency bands used by the eNB 1930. Although FIG. 11 illustrates an example in which the eNB 1930 includes multiple antennas 1940, the eNB 1930 may include a single antenna 1940.

The base station device 1950 includes a controller 1951, a memory 1952, a network interface 1953, a radio communication interface 1955, and a connection interface 1957. The controller 1951, the memory 1952, and the network interface 1953 are the same as the controller 1821, the memory 1822, and the network interface 1823 described with reference to FIG. 10.

The radio communication interface 1955 supports any cellular communication scheme (such as LTE and LTE-advanced), and provides wireless communications to a terminal in a sector corresponding to the RRH 1960 via the RRH 1960 and the antenna 1940. The radio communication interface 1955 may typically include, for example, a BB processor 1956. The BB processor 1956 is the same as the BB processor 1826 described with reference to FIG. 10, except that the BB processor 1956 is connected to an RF circuit 1964 of the RRH 1960 via the connection interface 1957. As shown in FIG. 11, the radio communication interface 1955 may include multiple BB processors 1956. For example, the multiple BB processors 1956 may be compatible with multiple frequency bands used by the eNB 1930. Although FIG. 11 illustrates an example in which the radio communication interface 1955 includes multiple BB processors 1956, the radio communication interface 1955 may include a single BB processor 1956.

The connection interface 1957 is an interface for connecting the base station device 1950 (the radio communication interface 1955) to the RRH 1960. The connection interface 1957 may be a communication module for communication in the above-described high-speed line that connects the base station device 1950 (the radio communication interface 1955) to the RRH 1960.

The RRH 1960 includes a connection interface 1961 and a radio communication interface 1963.

The connection interface 1961 is an interface for connecting the RRH 1960 (the radio communication interface 1963) to the base station device 1950. The connection interface 1961 may be a communication module for communication in the above-mentioned high-speed line.

The radio communication interface 1963 transmits and receives radio signals via the antenna 1940. The radio communication interface 1963 may typically include, for example, the RF circuit 1964. The RF circuit 1964 may include, for example, a mixer, a filter and an amplifier, and transmit and receive radio signals via the antenna 1940. As shown in FIG. 11, the radio communication interface 1963 may include multiple RF circuits 1964. For example, the multiple RF circuits 1964 may support multiple antenna elements. Although FIG. 11 illustrates an example in which the radio communication interface 1963 includes multiple RF circuits 1964, the radio communication interface 1963 may include a single RF circuit 1964.

In the eNB 1930 shown in FIG. 11, the transceiving unit in the electronic device 200 described with reference to FIG. 2 may be implemented, for example, through the radio communication interface 1963 and an optional antenna 1940. At least part of the functions of the generating unit and/or the sensing processing unit in the electronic device 200 may be implemented by the controller 1951. For example, the controller 1951 may implement at least part of the functions of the generating unit and the sensing processing unit by executing instructions stored in the memory 1952. The storage unit in the electronic device 200 may be implemented through the memory 1952.

### [Application Example of User Equipment]

### (First Application Example)

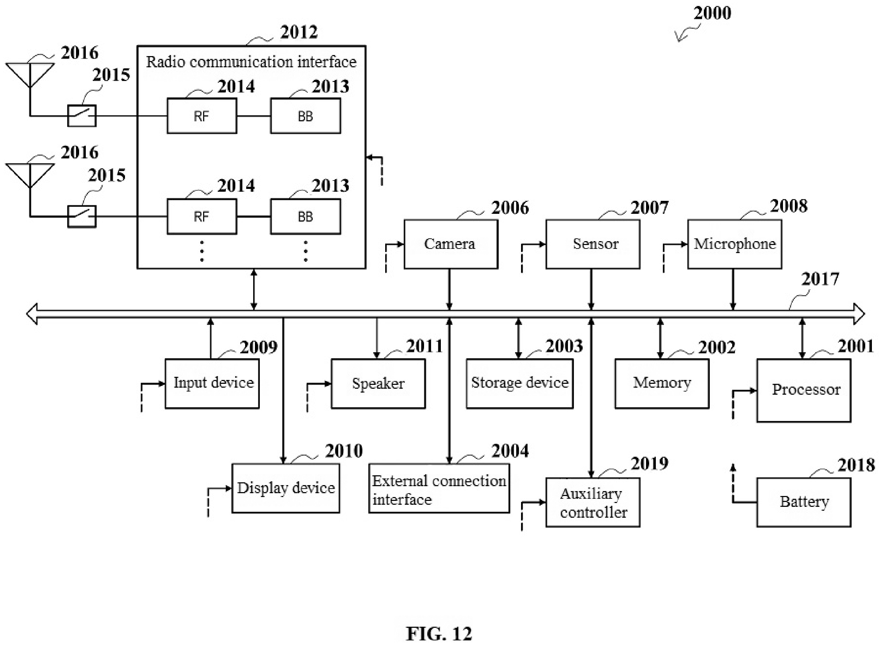

FIG. 12 is a block diagram illustrating an example of a schematic configuration of a smart phone 2000 to which the technology of the present disclosure is applicable. The smart phone 2000 includes a processor 2001, a memory 2002, a storage device 2003, an external connection interface 2004, a camera 2006, a sensor 2007, a microphone 2008, an input device 2009, a display device 2010, a speaker 2011, a radio communication interface 2012, one or more antenna switches 2015, one or more antennas 2016, a bus 2017, a battery 2018, and an auxiliary controller 2019.

The processor 2001 may be, for example, a CPU or a system on chip (SoC), and controls functions of the application layer and other layers of the smart phone 2000. The memory 2002 includes an RAM and an ROM, and stores data and programs executed by the processor 2001. The storage device 2003 may include a storage medium, such as a semiconductor memory and a hard disk. The external connection interface 2004 is an interface for connecting an external device (such as a memory card and a universal serial bus (USB) device) to the smart phone 2000.

The camera 2006 includes an image sensor (such as a charge coupled device (CCD) and a complementary metal oxide semiconductor (CMOS)), and generates a captured image. The sensor 2007 may include a group of sensors, such as a measurement sensor, a gyroscope sensor, a geomagnetic sensor, and an acceleration sensor. The microphone 2008 converts sound inputted to the smart phone 2000 into an audio signal. The input device 2009 includes, for example, a touch sensor configured to detect a touch on a screen of the display device 2010, a keypad, a keyboard, a button, or a switch, and receives an operation or information inputted from a user. The display device 2010 includes a screen, such as a liquid crystal display (LCD) or an organic light emitting diode (OLED) display, and displays an output image of the smart phone 2000. The speaker 2011 converts the audio signal outputted from the smart phone 2000 into sound.

The radio communication interface 2012 supports any cellular communication scheme (such as LTE and LTE-Advanced), and performs wireless communications. The radio communication interface 2012 may generally include, for example, a BB processor 2013 and an RF circuit 2014. The BB processor 2013 may perform, for example, encoding/decoding, modulation/demodulation, and multiplexing/demultiplexing, and perform various types of signal processing for wireless communications. In addition, the RF circuit 2014 may include, for example, a mixer, a filter and an amplifier, and transmit and receive a radio signal via the antenna 2016. The radio communication interface 2012 may be a chip module on which the BB processor 2013 and the RF circuit 2014 are integrated. As shown in FIG. 12, the radio communication interface 2012 may include multiple BB processors 2013 and multiple RF circuits 2014. Although FIG. 12 illustrates an example in which the radio communication interface 2012 includes multiple BB processors 2013 and multiple RF circuits 2014, the radio communication interface 2012 may include a single BB processor 2013 or a single RF circuit 2014.

In addition to the cellular communication scheme, the radio communication interface 2012 may support another type of wireless communication scheme, such as a short-range wireless communication scheme, a near field communication scheme, and a wireless local area network (LAN) scheme. In this case, the radio communication interface 2012 may include a BB processor 2013 and an RF circuit 2014 for each wireless communication scheme.

Each of the antenna switches 2015 switches a connection destination of the antenna 916 among multiple circuits (for example, circuits for different wireless communication schemes) included in the radio communication interface 2012.

Each of the antennas 2016 includes a single or multiple antenna elements (such as multiple antenna elements included in a MIMO antenna), and is configured for the radio communication interface 2012 to transmit and receive radio signals. As shown in FIG. 12, the smart phone 2000 may include multiple antennas 2016. Although FIG. 12 illustrates an example in which the smart phone 2000 includes multiple antennas 2016, the smart phone 2000 may include a single antenna 2016.

In addition, the smart phone 2000 may include antenna(s) 2016 for each wireless communication scheme. In this case, the antenna switches 2015 may be omitted from the configuration of the smart phone 2000.

The processor 2001, the memory 2002, the storage device 2003, the external connection interface 2004, the camera 2006, the sensor 2007, the microphone 2008, the input device 2009, the display device 2010, the speaker 2011, the radio communication interface 2012, and the auxiliary controller 2019 are connected to each other via the bus 2017. The battery 2018 supplies power to each block of the smart phone 2000 as shown in FIG. 12 via a feeder line. The feeder line is partially shown as a dashed line in the figure. The auxiliary controller 2019 operates the least necessary function of the smart phone 2000 in a sleep mode, for example.

In the smart phone 2000 shown in FIG. 12, the communication unit in the terminal device 700 described with reference to FIG. 7 may be implemented through the radio communication interface 2012 and the optional antenna 2016. At least part of the functions of the sensing unit in the terminal device 700 may be implemented by the processor 2001 or the auxiliary controller 2019. For example, the processor 2001 or the auxiliary controller 2019 may implement at least part of the functions of the sensing unit by executing instructions stored in the memory 2002 or the storage device 2003. The storage unit in the terminal device 700 may be implemented through the memory 2002 or the storage device 2003.

### (Second Application Example)

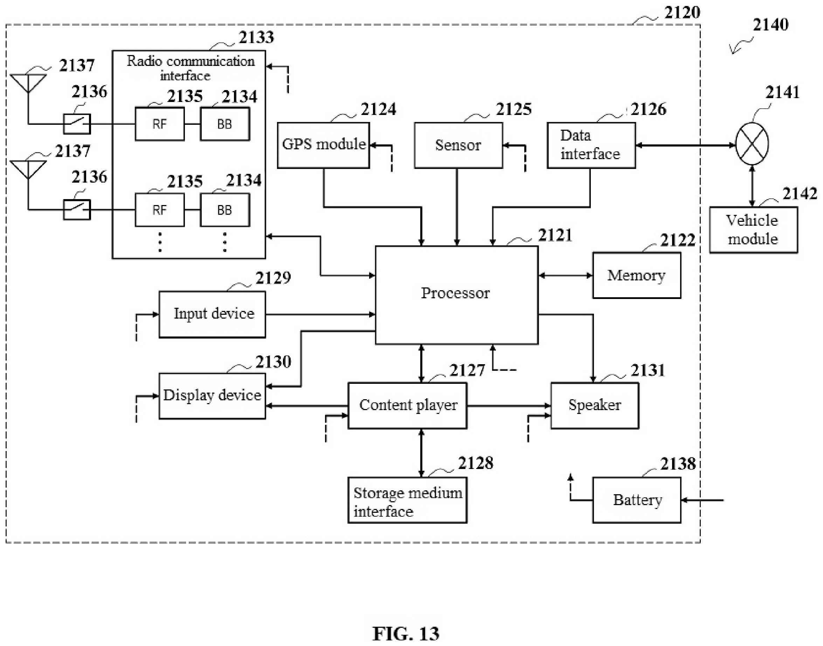

FIG. 13 is a block diagram illustrating an example of a schematic configuration of an automobile navigation device 2120 to which the technology of the present disclosure is applicable. The automobile navigation device 2120 includes a processor 2121, a memory 2122, a global positioning system (GPS) module 2124, a sensor 2125, a data interface 2126, a content player 2127, a storage medium interface 2128, an input device 2129, a display device 2130, a speaker 2131, a radio communication interface 2133, one or more antenna switches 2136, one or more antennas 2137, and a battery 2138.

The processor 2121 may be, for example, a CPU or SoC, and controls the navigation function and other functions of the automobile navigation device 2120. The memory 2122 includes an RAM and an ROM, and stores data and programs executed by the processor 2121.

The GPS module 2124 measures a position (such as latitude, longitude, and altitude) of the automobile navigation device 2120 based on a GPS signal received from a GPS satellite. The sensor 2125 may include a group of sensors, such as a gyroscope sensor, a geomagnetic sensor, and an air pressure sensor. The data interface 2126 is connected to, for example, an in-vehicle network 2141 via a terminal not shown, and acquires data (such as vehicle speed data) generated by a vehicle.

The content player 2127 reproduces content stored in a storage medium (such as a CD and a DVD) inserted into the storage medium interface 2128. The input device 2129 includes, for example, a touch sensor configured to detect a touch on a screen of the display device 2130, a button, or a switch, and receives an operation or information inputted from a user. The display device 2130 includes a screen such as an LCD or OLED display, and displays an image of a navigation function or reproduced content. The speaker 2131 outputs a sound of the navigation function or reproduced content.

The radio communication interface 2133 supports any cellular communication scheme (such as LTE and LTE-Advanced), and performs wireless communications. The radio communication interface 2133 may generally include, for example, a BB processor 2134 and an RF circuit 2135. The BB processor 2134 may perform, for example, encoding/decoding, modulation/demodulation, and multiplexing/demultiplexing, and perform various types of signal processing for wireless communications. In addition, the RF circuit 2135 may include, for example, a mixer, a filter and an amplifier, and transmit and receive a radio signal via the antenna 2137. The radio communication interface 2133 may be a chip module on which the BB processor 2134 and the RF circuit 2135 are integrated. As shown in FIG. 13, the radio communication interface 2133 may include multiple BB processors 2134 and multiple RF circuits 2135. Although FIG. 13 illustrates an example in which the radio communication interface 2133 includes multiple BB processors 2134 and multiple RF circuits 2135, the radio communication interface 2133 may include a single BB processor 2134 or a single RF circuit 2135.

In addition to the cellular communication scheme, the radio communication interface 2133 may support another type of wireless communication scheme, such as a short-range wireless communication scheme, a near field communication scheme, or a wireless LAN scheme. In this case, the radio communication interface 2133 may include a BB processor 2134 and an RF circuit 2135 for each wireless communication scheme.

Each of the antenna switches 2136 switches a connection destination of the antenna 2137 among multiple circuits (such as circuits for different wireless communication schemes) included in the radio communication interface 2133.

Each of the antennas 2137 includes a single or multiple antenna elements (such as multiple antenna elements included in a MIMO antenna), and is configured for the radio communication interface 2133 to transmit and receive radio signals. As shown in FIG. 13, the automobile navigation device 2120 may include multiple antennas 2137. Although FIG. 13 shows an example in which the automobile navigation device 2120 includes multiple antennas 2137, the automobile navigation device 2120 may include a single antenna 2137.

In addition, the automobile navigation device 2120 may include antenna(s) 2137 for each wireless communication scheme. In this case, the antenna switches 2136 may be omitted from the configuration of the automobile navigation device 2120.

The battery 2138 supplies power to blocks of the automobile navigation device 2120 shown in FIG. 13 via a feeder line. The feeder line is partially shown as a dashed line in the figure. The battery 2138 accumulates electric power supplied from the vehicle.

In the vehicle navigation device 2120 shown in FIG. 13, the transceiving unit in the electronic device 700 described with reference to FIG. 7 may be implemented through the radio communication interface 2133 and the optional antenna 2137. At least part of the functions of the sensing unit in the terminal device 700 may be implemented by the processor 2121. For example, the processor 2121 may implement at least part of the functions of the sensing unit by executing instructions stored in the memory 2122. The storage unit in the terminal device 700 may be implemented through the memory 2122.

The technology of the present disclosure may be implemented as an in-vehicle system (or vehicle) 2140 including the automobile navigation device 2120, an in-vehicle network 2141, and one or more blocks of vehicle modules 2142. The vehicle modules 2142 generate vehicle data (such as vehicle speed, engine speed, and failure information), and outputs the generated data to the in-vehicle network 2141.

Preferred embodiments of the present disclosure are described above with reference to the drawings. The present disclosure is not limited to the above examples. Various alternations and modifications can be made by those skilled in the art within the scope of the appended claims. It should be understood that these alternations and modifications shall naturally fall within the technical scope of the present disclosure.

For example, units shown by a dotted line block in the functional block diagram shown in the drawings indicate that the functional units are optional in the corresponding device, and the optional functional units may be combined appropriately to achieve required functions.

For example, multiple functions implemented by a single unit in the above embodiments may be implemented by separate devices. Alternatively, multiple functions implemented by multiple units in the above embodiments may be implemented by separate devices respectively. In addition, a single one of the above functions may be implemented by multiple units. Such configurations are naturally included in the technical scope of the present disclosure.

In the specification, steps described in the flowchart include not only the processes performed chronologically as the described sequence, but also the processes performed in parallel or individually rather than chronologically. Furthermore, the steps performed chronologically may be performed in another sequence appropriately.

Furthermore, the present disclosure may have configurations as described below.
1. An electronic device, comprising
   processing circuitry, configured to:
   transmit a positioning instruction to each of a plurality of terminal devices near a positioning target to instruct the terminal device to transmit a sensing signal to the positioning target and receive an echo signal to obtain sensing data;
   receive a plurality of pieces of sensing data from the plurality of terminal devices; and
   process the received sensing data to obtain a positioning result for the positioning target.
2. The electronic device according to configuration 1, wherein
   the positioning instruction is for indicating a preliminary position of the positioning target.
3. The electronic device according to configuration 1, wherein the positioning instruction and/or the sensing data comprises beam-related information of the sensing signal.
4. The electronic device according to configuration 1, wherein the processing circuitry is further configured to:
   obtain, based on the sensing data, an intensity of the echo signal and an angle of the positioning target relative to the terminal device.
5. The electronic device according to configuration 4, wherein the processing circuitry is further configured to:
   select, from the plurality of pieces of sensing data, a portion of sensing data such that sensing vectors based on the selected sensing data constitute or approximately constitute a convex hull set of sensing vectors based on the plurality of pieces of sensing data, wherein the sensing vectors based on the sensing data are determined according to the intensity and the angle; and
   process the selected sensing data to obtain the positioning result.
6. The electronic device according to configuration 4, wherein the processing circuitry is further configured to: before transmitting the positioning instruction,
   transmit a preliminary positioning instruction to each of candidate terminal devices near the positioning target to instruct the candidate terminal device to transmit a sensing signal to the positioning target and receive an echo signal to obtain preliminary sensing data;
   receive the preliminary sensing data from the candidate terminal device, and obtain, based on the preliminary sensing data, an intensity of the echo signal and an angle of the positioning target relative to the terminal device; and
   select, from the candidate terminal devices, the plurality of terminal devices such that a plurality of preliminary sensing vectors based on preliminary sensing data of the plurality of terminal devices constitute or approximately constitute a convex hull set of all preliminary sensing vectors based on preliminary sensing data of all candidate terminal devices,
   wherein a preliminary sensing vector based on preliminary sensing data is determined according to the intensity and the angle obtained based on the preliminary sensing data.
7. The electronic device according to configuration 1, wherein the positioning instruction comprises control information regarding a time and/or manner in which the terminal device transmits the sensing signal and/or the sensing data.
8. The electronic device according to configuration 7, wherein the control information indicates a period at which the terminal device transmits the sensing signal and the sensing data, and the processing circuitry is further configured to:
   in each period, receive a plurality of pieces of sensing data, process the received sensing data to obtain a positioning result, and transmit the obtained positioning result as an updated position of the positioning target to the plurality of terminal devices.
9. The electronic device according to configuration 1, wherein the processing circuitry is further configured to:
   select, from the plurality of pieces of sensing data, sensing data in which the echo signals are of high quality; and
   fuse the selected sensing data to obtain the positioning result.
10. The electronic device according to configuration 1, wherein the processing circuitry is further configured to:
   transmit the positioning instruction on reception of a positioning request from the positioning target and/or in response to a positioning precision of the positioning target being lower than a precision threshold.
11. A terminal device, comprising
   processing circuitry, configured to:
   receive a positioning instruction from an electronic device;
   based on the positioning instruction, transmit a sensing signal to a positioning target and receive an echo signal to obtain sensing data;
   transmit the sensing data to the electronic device, for the electronic device to process a plurality of pieces of sensing data from a plurality of terminal devices to obtain a positioning result for the positioning target.
12. The terminal device according to configuration 11, wherein the processing circuitry is further configured to:
   transmit the sensing signal to the positioning target by using a directional beam.
13. The terminal device according to configuration 11, wherein the positioning instruction is for indicating a preliminary position of the positioning target.
14. The terminal device according to configuration 11, wherein the positioning instruction and/or the sensing data comprises beam-related information of the sensing signal.
15. The terminal device according to configuration 11, wherein
   the sensing data indicates an intensity of the echo signal and an angle of the positioning target relative to the terminal device.
16. The terminal device according to configuration 11, wherein the positioning instruction comprises control information regarding a time and/or manner in which the terminal device transmits the sensing signal and/or the sensing data.
17. The terminal device according to configuration 16, wherein the processing circuitry is further configured to:
   transmit the sensing signal and/or the sensing data according to the time and/or manner indicated by the control information.
18. The terminal device according to configuration 16, wherein the control information indicates a period at which the terminal device transmits the sensing signal and the sensing data, and the processing circuitry is further configured to:
   in each period, transmit a sensing signal to a position of the positioning target and receive an echo signal to obtain sensing data, transmit the obtained sensing data to the electronic device, and receive a positioning result from the electronic device as an updated position of the positioning target.
19. A positioning method, comprising:
   transmitting a positioning instruction to each of a plurality of terminal devices near a positioning target to instruct the terminal device to transmit a sensing signal to the positioning target and receive an echo signal to obtain sensing data;
   receiving a plurality of pieces of sensing data from the plurality of terminal devices; and
   processing the received sensing data to obtain a positioning result for the positioning target.
20. A positioning method implemented on a terminal device side, comprising:
   receiving a positioning instruction from an electronic device;
   based on the positioning instruction, transmitting a sensing signal to a positioning target and receiving an echo signal to obtain sensing data;
   transmitting the sensing data to the electronic device, for the electronic device to process a plurality of pieces of sensing data from a plurality of terminal devices to obtain a positioning result for the positioning target.
21. A non-transitory computer-readable storage medium storing executable instructions, wherein the executable instructions, when executed by a processor, cause the processor to perform the positioning method according to configuration 19 or 20.

Although the embodiments of the present disclosure are described in detail above with reference to the accompanying drawings, it should be understood that the embodiments are only for illustrating the present disclosure and do not constitute a limitation of the present disclosure. For those skilled in the art, various modifications and changes can be made to the embodiments without departing from the essence and scope of the present disclosure. Therefore, the scope of the present disclosure is limited by only the appended claims and equivalents thereof.

## Claims

1. An electronic device, comprising
processing circuitry, configured to:
transmit a positioning instruction to each of a plurality of terminal devices near a positioning target to instruct the terminal device to transmit a sensing signal to the positioning target and receive an echo signal to obtain sensing data;
receive a plurality of pieces of sensing data from the plurality of terminal devices; and
process the received sensing data to obtain a positioning result for the positioning target.

2. The electronic device according to claim 1, wherein
the positioning instruction is for indicating a preliminary position of the positioning target.

3. The electronic device according to claim 1, wherein the positioning instruction and/or the sensing data comprises beam-related information of the sensing signal.

4. The electronic device according to claim 1, wherein the processing circuitry is further configured to:
obtain, based on the sensing data, an intensity of the echo signal and an angle of the positioning target relative to the terminal device.

5. The electronic device according to claim 4, wherein the processing circuitry is further configured to:
select, from the plurality of pieces of sensing data, a portion of sensing data such that sensing vectors based on the selected sensing data constitute or approximately constitute a convex hull set of sensing vectors based on the plurality of pieces of sensing data, wherein the sensing vectors based on the sensing data are determined according to the intensity and the angle; and
process the selected sensing data to obtain the positioning result.

6. The electronic device according to claim 4, wherein the processing circuitry is further configured to: before transmitting the positioning instruction,
transmit a preliminary positioning instruction to each of candidate terminal devices near the positioning target to instruct the candidate terminal device to transmit a sensing signal to the positioning target and receive an echo signal to obtain preliminary sensing data;
receive the preliminary sensing data from the candidate terminal device, and obtain, based on the preliminary sensing data, an intensity of the echo signal and an angle of the positioning target relative to the terminal device; and
select, from the candidate terminal devices, the plurality of terminal devices such that a plurality of preliminary sensing vectors based on preliminary sensing data of the plurality of terminal devices constitute or approximately constitute a convex hull set of all preliminary sensing vectors based on preliminary sensing data of all candidate terminal devices,
wherein a preliminary sensing vector based on preliminary sensing data is determined according to the intensity and the angle obtained based on the preliminary sensing data.

7. The electronic device according to claim 1, wherein the positioning instruction comprises control information regarding a time and/or manner in which the terminal device transmits the sensing signal and/or the sensing data.

8. The electronic device according to claim 7, wherein the control information indicates a period at which the terminal device transmits the sensing signal and the sensing data, and the processing circuitry is further configured to:
in each period, receive a plurality of pieces of sensing data, process the received sensing data to obtain a positioning result, and transmit the obtained positioning result as an updated position of the positioning target to the plurality of terminal devices.

9. The electronic device according to claim 1, wherein the processing circuitry is further configured to:
select, from the plurality of pieces of sensing data, sensing data in which the echo signals are of high quality; and
fuse the selected sensing data to obtain the positioning result.

10. The electronic device according to claim 1, wherein the processing circuitry is further configured to:
transmit the positioning instruction on reception of a positioning request from the positioning target and/or in response to a positioning precision of the positioning target being lower than a precision threshold.

11. A terminal device, comprising
processing circuitry, configured to:
receive a positioning instruction from an electronic device;
based on the positioning instruction, transmit a sensing signal to a positioning target and receive an echo signal to obtain sensing data;
transmit the sensing data to the electronic device, for the electronic device to process a plurality of pieces of sensing data from a plurality of terminal devices to obtain a positioning result for the positioning target.

12. The terminal device according to claim 11, wherein the processing circuitry is further configured to:
transmit the sensing signal to the positioning target by using a directional beam.

13. The terminal device according to claim 11, wherein the positioning instruction is for indicating a preliminary position of the positioning target.

14. The terminal device according to claim 11, wherein the positioning instruction and/or the sensing data comprises beam-related information of the sensing signal.

15. The terminal device according to claim 11, wherein
the sensing data indicates an intensity of the echo signal and an angle of the positioning target relative to the terminal device.

16. The terminal device according to claim 11, wherein the positioning instruction comprises control information regarding a time and/or manner in which the terminal device transmits the sensing signal and/or the sensing data.

17. The terminal device according to claim 16, wherein the processing circuitry is further configured to:
transmit the sensing signal and/or the sensing data according to the time and/or manner indicated by the control information.

18. The terminal device according to claim 16, wherein the control information indicates a period at which the terminal device transmits the sensing signal and the sensing data, and the processing circuitry is further configured to:
in each period, transmit a sensing signal to a position of the positioning target and receive an echo signal to obtain sensing data, transmit the obtained sensing data to the electronic device, and receive a positioning result from the electronic device as an updated position of the positioning target.

19. A positioning method, comprising:
transmitting a positioning instruction to each of a plurality of terminal devices near a positioning target to instruct the terminal device to transmit a sensing signal to the positioning target and receive an echo signal to obtain sensing data;
receiving a plurality of pieces of sensing data from the plurality of terminal devices; and
processing the received sensing data to obtain a positioning result for the positioning target.

20. A positioning method implemented on a terminal device side, comprising:
receiving a positioning instruction from an electronic device;
based on the positioning instruction, transmitting a sensing signal to a positioning target and receiving an echo signal to obtain sensing data;
transmitting the sensing data to the electronic device, for the electronic device to process a plurality of pieces of sensing data from a plurality of terminal devices to obtain a positioning result for the positioning target.

21. A non-transitory computer-readable storage medium storing executable instructions, wherein the executable instructions, when executed by a processor, cause the processor to perform the positioning method according to claim 19 or 20.
